# EUROPEAN PATENT SPECIFICATION

(11) **EP 4 636 459 B1**
(45) Date of publication and mention of the grant of the patent: **09.09.2026**
(21) Application number: 25167889.2
(22) Date of filing: 02.04.2025
(51) Int. Cl.: G02B 27/00, G02B 27/01

(54) **LIGHT FIELD DISPLAY USING BIREFRINGEMENT MATERIALS AND METAMATERIALS**
LICHTFELDANZEIGE MIT DOPPELBRECHENDEN MATERIALIEN UND METAMATERIALIEN
AFFICHAGE DE CHAMP LUMINEUX UTILISANT DES MATÉRIAUX ET MÉTAMATÉRIAUX BIRÉFRINGENTS

(30) Priority: 16.04.2024 US 202418636386
(43) Date of publication of application: 22.10.2025
(73) Proprietor: Distance Technologies Oy, 00530 Helsinki (FI)
(72) Inventor: Strandborg, Mikko, 10940 Hangonkylä (FI)
(74) Representative: Moosedog Oy

(56) References cited:
- US-A1- 2021 240 036
- US-A1- 2023 118 979

## Description

### TECHNICAL FIELD

The present disclosure relates to systems incorporating light field display using birefringent materials and metamaterials. The present disclosure also relates to methods incorporating light field display using birefringent materials and metamaterials.

### BACKGROUND

Robust autostereoscopy and multiscopy are largely unsolved problems. There exist various different types of autostereoscopic displays. However, existing autostereoscopic displays suffer from several drawbacks.

Firstly, crosstalk is a significant problem in existing autostereoscopic displays. Lenticular arrays or parallax barriers are conventionally used to direct light to different eyes of a user; however, an imperfect alignment or a poor design results in crosstalk. Crosstalk not only leads to a degradation in a three-dimensional (3D) visual scene presented to user(s), but also causes visual discomfort and reduces an overall quality of the users' viewing experience.

Secondly, low resolution poses significant challenges in existing autostereoscopic displays, impacting the quality of the 3D visual scene. When displaying virtual content on low-resolution autostereoscopic displays, aliasing artifacts and jagged edges may become even more noticeable, particularly in high-contrast or detailed visual scenes. This can greatly detract from a realism and immersiveness of the 3D visual scene.

Thirdly, low brightness levels can make it difficult for users to discern visual details and perceive colours, particularly in brightly lit environments or when viewing content with dark scenes. This can lead to eyestrain and reduced usability, as users may struggle to perceive the 3D visual scene.

Fourthly, narrow viewing angles is another significant challenge in existing autostereoscopic displays, impacting the overall user experience and usability. As a user moves away from an optimal viewing position, ghosting artifacts become pronounced, thereby causing discomfort. Fifthly, due to a narrow field of view provided by the existing autostereoscopic displays, only a limited portion of the 3D visual scene may be visible in 3D, restricting a spatial coverage and immersiveness of the 3D visual scene. Moreover, a narrow field of view can create visual discontinuities, where objects or elements within the 3D visual scene abruptly transition between 3D and 2D as the user's perspective changes. This can be jarring and may disrupt a sense of continuity and realism in the user's viewing experience.

Therefore, in light of the foregoing discussion, there exists a need to overcome the aforementioned drawbacks. Documents US2021/240036 illustrates a known autostereoscopic display.

### SUMMARY

The present disclosure seeks to provide novel systems and novel methods for presenting, to one or more users, high-resolution and artefact-free virtual content via a synthetic light field at an optimal brightness and a wide field of view, as compared to the prior art. The aim of the present disclosure is achieved by systems and methods which incorporate light field display using birefringent materials and metamaterials, as defined in the appended independent claims to which reference is made to. Advantageous features are set out in the appended dependent claims. Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 depicts an example implementation of a system incorporating light field display using a birefringent material or a metamaterial, in accordance with an embodiment of the present disclosure;
FIGs. 2A and 2B illustrate how autostereoscopic view is achieved, pursuant to embodiments of the present disclosure;
FIGs. 3A and 3B depict different implementations of a display unit, in accordance with an embodiment of the present disclosure;
FIG. 4 depicts an implementation of a system incorporating light field display using a birefringent material or a metamaterial within a real-world environment, in accordance with an embodiment of the present disclosure; and
FIG. 5 depicts steps of a method incorporating light field display using a birefringent material or a metamaterial, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system comprising:
tracking means;
a display unit comprising a first display region and a second display region;
an optical element arranged on an optical path of the display unit, the optical element being made of any one of: (i) a birefringent material, (ii) a metamaterial; and
at least one processor configured to:
   utilise the tracking means to determine a relative location of a first eye and of a second eye of at least one user with respect to the optical element;
   obtain a first virtual image and a second virtual image to be presented to the first eye and the second eye of the at least one user, respectively, based on the relative location of the first eye and of the second eye of the at least one user with respect to the optical element;
   generate at least one image to be employed at the display unit, based on the first virtual image, the second virtual image, the relative location of the first eye and of the second eye of the at least one user with respect to the optical element, and a relative location of the optical element with respect to the first display region and the second display region; and
   display the at least one image via the display unit,
wherein the optical element is employed to re-direct light emanating from photo-emitting cells on the second display region to bend towards the first eye and the second eye of the at least one user, whilst allowing light emanating from photo-emitting cells on the first display region to be incident upon the first eye and the second eye of the at least one user without bending.

In a second aspect, an embodiment of the present disclosure provides a method comprising:
utilising tracking means to determine a relative location of a first eye and of a second eye of at least one user with respect to an optical element, the optical element being arranged on an optical path of a display unit comprising a first display region and a second display region, the optical element being made of any one of: (i) a birefringent material, (ii) a metamaterial;
obtaining a first virtual image and a second virtual image to be presented to the first eye and the second eye of the at least one user, respectively, based on the relative location of the first eye and of the second eye of the at least one user with respect to the optical element;
generating at least one image to be employed at the display unit, based on the first virtual image, the second virtual image, the relative location of the first eye and of the second eye of the at least one user with respect to the optical element, and a relative location of the optical element with respect to the first display region and the second display region; and
displaying the at least one image via the display unit,
wherein the optical element is employed to re-direct light emanating from photo-emitting cells on the second display region to bend towards the first eye and the second eye of the at least one user, whilst allowing light emanating from photo-emitting cells on the first display region to be incident upon the first eye and the second eye of the at least one user without bending.

The present disclosure provides the aforementioned system and the aforementioned method incorporating light field display using birefringent materials or metamaterials. Such a novel system and method are susceptible to be utilised for presenting, to one or more users, high-resolution and artefact-free virtual content via a synthetic light field at an optimal brightness and a wide field of view, as compared to the prior art. Being made of any one of: (i) the birefringent material, (ii) the metamaterial, the optical element allows almost all the light incident thereupon to pass through towards the user. This allows the system to eliminate the problem of low brightness levels, which is encountered in conventional autostereoscopic displays. Moreover, the at least one image is generated precisely and accurately based on the relative location of the first eye and of the second eye of the at least one user with respect to the optical element, and the relative location of the optical element with respect to the first display region and the second display region. This allows the system to not only eliminate the problem of crosstalk, but also widen viewing angles from which the at least one user can view the virtual content being presented. Furthermore, the system and method are susceptible to be implemented with display units of any dimension and native resolution. In other words, the system and method can be leveraged to generate the virtual content at a high resolution (for example, such as 60 pixels per degree or more) and at a wide field of view, as compared to the prior art.

Moreover, the optical element can be implemented as a passive optical element or an active optical element, as will be elaborated in more detail later. This allows the system and method to be implemented in various different ways, each of which ways have their own advantages. To name a few, the passive optical element would make the system and method simple to implement, yet robust. On the other hand, the active optical element would enable dynamic and precise control, whilst facilitating robust autostereoscopy. Both the implementations support real-time simultaneous presentation of virtual images to eyes of one or more users.

It will be appreciated that the first virtual image and the second virtual image, when presented to the first eye and the second eye of the at least one user, respectively, correspond to a first part and a second part of the synthetic light field. As is well known, presenting slightly different virtual images (namely, slightly offset virtual images) to the eyes of the at least one user enables the at least one user to perceive depth in the virtual content being presented through these virtual images. In some implementations, the synthetic light field can also be presented to a camera. In such a case, a relative location of a camera lens of said camera with respect to the optical element can be determined by utilising the tracking means; a virtual image to be presented to the camera can then be obtained accordingly, and taken into account when generating the at least one image. It will be appreciated that said camera could be a camera of a user device, or could be a camera arranged in a space in which the at least one user is present. The user device could, for example, be a smartphone, a laptop, a tablet, a phablet, or the like.

Throughout the present disclosure, the term *"tracking means"* refers to a specialised equipment for detecting and/or following a location of at least a first eye and a second eye of a given user. Optionally, the tracking means is implemented as at least one tracking camera. The at least one tracking camera may comprise at least one of: at least one visible-light camera, at least one infrared (IR) camera, at least one depth camera. Examples of such a visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of such a depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera and the at least one depth camera) may be utilised in the tracking means. When different types of images captured by the various different types of tracking cameras are utilised, the location of the user's eyes can be determined highly accurately, as results obtained from one type of image can be used to refine results obtained from another type of image. Herein, these different types of images constitute the tracking data collected by the tracking means, and may be in the form of at least one of: visible-light images, IR images, depth images.

It will be appreciated that the at least one tracking camera is arranged to face the at least one user, to facilitate tracking of the location of the user's eyes. A relative location of the at least one tracking camera with respect to the optical element is fixed, and is pre-known. A location of the first eye and of the second eye with respect to the at least one tracking camera can be accurately determined. Thus, the relative location of the first eye and of the second eye with respect to the optical element can be determined, based on the relative location of the at least one tracking camera with respect to the optical element, and the location of the first eye and of the second eye with respect to the at least one tracking camera. It will be appreciated that the tracking means tracks both eyes of the at least one user with a significantly high accuracy and precision, such that an error in determining the relative location may, for example, be minimised to within a tolerance range of approximately (+/-) 8 millimetres.

It will be appreciated that the tracking means is employed to repeatedly track the location of the eyes of the given user throughout a given session. This allows for repeatedly determining the relative location of the first eye and of the second eye with respect to the optical element in real time or near-real time. It is to be understood that when the synthetic light field is being produced for a plurality of users simultaneously, relative locations of both eyes of each user from amongst the plurality of users are determined in a same manner as discussed hereinabove.

The at least one processor controls an overall operation of the system. The at least one processor is communicably coupled to at least the tracking means and the display unit, and optionally, the optical element (when the optical element is implemented as the active optical element). Optionally, the at least one processor is implemented as a processor of the display unit. Alternatively, optionally, the at least one processor is implemented as a processor of a computing device that is communicably coupled to the display unit. Examples of the computing device include, but are not limited to, a laptop, a desktop, a tablet, a phablet, a personal digital assistant, a workstation, and a console. Yet alternatively, optionally, the at least one processor is implemented as a cloud server (namely, a remote server) that provides a cloud computing service.

Moreover, the first virtual image and the second virtual image are obtained based on the relative location of the first eye and of the second eye with respect to the optical element, because the light emanating from the first display region and the second display region is directed towards the first eye and the second eye of the at least one user via the optical element only. In some implementations, when obtaining, the at least one processor is configured to generate the first virtual image and the second virtual image from a perspective of the relative location of the first eye and of the second eye of the at least one user, by employing a three-dimensional (3D) model of at least one virtual object. It will be appreciated that the relative location of the first eye and of the second eye indicate a viewing direction of the first eye and a viewing direction of the second eye, respectively; therefore, the first virtual image and the second virtual image are generated based on these viewing directions. Hereinabove, the term *"virtual object"* refers to a computer-generated object (namely, a digital object). Examples of the at least one virtual object may include, but are not limited to, a virtual navigation tool, a virtual gadget, a virtual message, a virtual entity, a virtual entertainment media, and a virtual information. The term *"three-dimensional model"* of the at least one virtual object refers to a data structure that comprises comprehensive information pertaining to the at least one virtual object. Such a comprehensive information is indicative of at least one of: a plurality of features of the at least one virtual object or its portion, a shape and a size of the at least one virtual object or its portion, a pose of the at least one virtual object or its portion, a material of the at least one virtual object or its portion, a colour and an optical depth of the at least one virtual object or its portion. The 3D model may be generated in the form of a 3D polygonal mesh, a 3D point cloud, a 3D surface cloud, a voxel-based model, or similar. Optionally, the at least one processor is configured to store the 3D model at a data repository that is communicably coupled to the at least one processor. The data repository may be implemented as a memory of the at least one processor, a cloud-based database, or similar. In other implementations, the at least one processor is configured to obtain the first virtual image and the second virtual image in a form of two-dimensional (2D) user interface (UI) elements. The 2D UI elements could pertain to, for example, a virtual navigation tool, a virtual gadget, a virtual message, a virtual entity, a virtual entertainment media, a virtual information, or similar.

For purposes of the present disclosure, it will be appreciated that the first display region and the second display region (of the display unit) can be implemented on a same display or separate displays. In other words, the display unit may either comprise a single display that comprises both the first display region and the second display region, or comprise a first display and at least one second display, the first display comprising the first display region, the at least one second display comprising the second display region. Examples of such displays include, but are not limited to, Liquid Crystal Displays (LCD), Light-Emitting Diode (LED) displays, Organic LED (OLED) displays, micro LED displays, Active Matrix OLED (AMOLED) displays, and Liquid Crystal on Silicon (LCoS)-based displays.

Optionally, the first display region and the second display region are arranged at different optical depths with respect to the eyes of the at least one user. Herein, an optical depth of a given display region (namely, the first display region or the second display region) can be determined as a sum of a distance between the given display region and the optical element and a distance between the optical element and the eyes of the at least one user, such distances being measured along the optical path. It will be appreciated here that a difference between the different optical depths (of the first display region and the second display region with respect to the eyes of the at least one user) is negligible as compared to the distance between the optical element and the eyes. A technical benefit of arranging the first display region and the second display region at the different optical depths is that it enables to achieve even more robust stereoscopy. As mentioned earlier, autostereoscopy is achieved by presenting the first virtual image and the second virtual image to the at least one user. Said different optical depths further improve the robustness and the quality of the autostereoscopy. This is because due to the different optical depths, the eyes would see an image formed by the light emanating from the first display region at a different location than an image formed by the light emanating from the second display region.

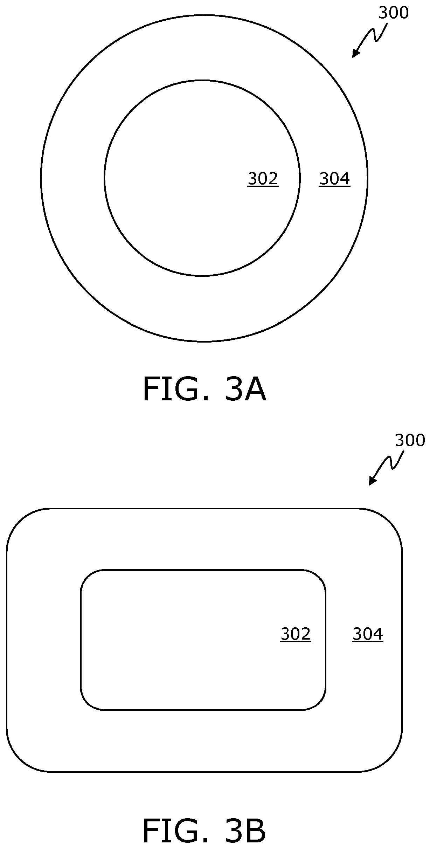

In some implementations, the first display region and the second display region may be arranged side-by-side. In other implementations, the second display region may surround the first display region. Some examples of such an implementation have been provided in conjunction with FIGs. 3A and 3B. It will be appreciated that the second display region could be implemented as a region of the display unit that is not visible to the at least one user directly. Moreover, in yet other implementations, the first display region and the second display region could be intermixed. In such a case, there is no physical demarcation between the first display region and the second display region.

Most importantly, it should be noted that irrespective of an implementation of the display unit, the at least one image (that is displayed at the display unit) is not similar to a conventional light field image (namely, a conventional radiance image). Notably, the at least one image is different from any kind of light field image known in the prior art. In implementations where the first display region and the second display region are on a same display, the at least one image comprises a single image, wherein a first part of this single image is displayed at the first display region, while a second part of this single image is displayed at the second display region. In other implementations where the first display region and the second display region are on separate displays, the at least one image comprises a first image and at least one second image, wherein the first image is displayed at the first display (comprising the first display region), while the at least one second image is displayed at the at least one second display (comprising the second display region). The optical element is employed to re-direct the light emanating from the photo-emitting cells on the second display region to bend towards the first eye and the second eye of the at least one user, whilst allowing the light emanating from the photo-emitting cells on the first display region to be incident upon the first eye and the second eye of the at least one user without bending. How this produces an autostereoscopic view for the at least one user will be elaborated later in more detail.

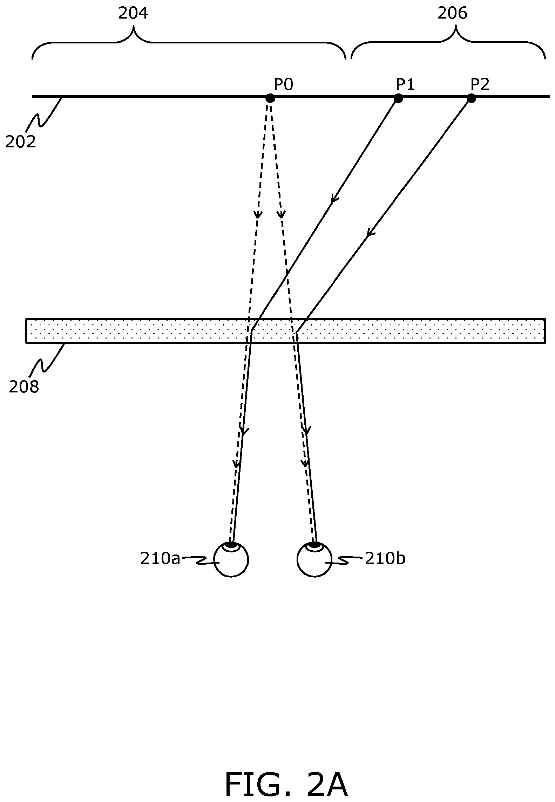

Optionally, when the optical element is made of the birefringent material, the at least one processor is configured to control a polarization orientation of light emanating from a given group of photo-sensitive cells of the second display region, based on a birefringence of the birefringent material, an incidence angle of said light being incident upon a given part of the optical element, and the refraction angle of the light after being re-directed by the given part of the optical element towards a given eye of the at least one user. The given group comprises neighbouring photo-sensitive cells. It will be appreciated that a polarization orientation of light emanating from the second display region needs to be different from a polarization orientation of light emanating from the first display region. This is based on a fact that a birefringent material exhibits different refractive indices for light polarized in different polarization orientations. Accordingly, a technical benefit of controlling the polarization orientation of the light based on the aforesaid factors is that the light emanating from the given group of photo-sensitive cells of the second display region can be re-directed towards to the given eye of the at least one user accurately by utilising the birefringence of the birefringent material. In order to understand this better, an example implementation has been illustrated in conjunction with FIG. 2A. It should be noted here that this is applicable for both the passive optical element as well as the active control element. Irrespective of whether the optical element is passive or active, the optical element acts as a birefringent combiner that combines the light emanating from the photo-sensitive cells of the first display region (that passes through the optical element without bending) with the light emanating from the photo-sensitive cells of the second display region (that bends while passing through the optical element towards the given eye).

In implementations where the first display region and the second display region are on the separate displays, or in implementations where the first display region and the second display region are on the same display, but can be configured differently, the first display region can be configured to emit horizontally polarized light, while the second display region can be configured to emit vertically polarized light. In other implementations, both the first display region and the second display region can be configured to emit unpolarized light (namely, light having all polarization orientations), while the optical element can be configured to utilise a horizontally-polarized component of the unpolarized light emanating from the first display region, whilst utilising a vertically-polarized component of the unpolarized light emanating from the second display region, or vice versa.

According to an embodiment, the optical element is actively controllable. Optionally, when the optical element is made of the birefringent material, the birefringent material comprises a liquid crystal material or an electro-optic quartz, and the at least one processor is configured to control the optical element by controlling a refractive index of the liquid crystal material or the electro-optic quartz in a given part of the optical element, based on an incidence angle of light emanating from a given group of photo-sensitive cells of the second display region being incident upon the given part of the optical element and a refraction angle of the light after being re-directed by the given part of the optical element towards the given eye of the at least one user. The refractive index can be controlled using a drive circuit of the optical element. Driving circuits are well known in the art. A technical benefit of controlling the optical element in such a case is that selection (interchangeably referred to as "generation", throughout the present disclosure) of intensity values for pixels of the at least one image can be made easily, as compared to a case of the passive optical element. How intensity values can be selected will be described later in more detail.

Alternatively, optionally, when the optical element is made of the metamaterial, the optical element is semi-transparent and comprises micromirrors, and the at least one processor is configured to control the optical element by controlling an orientation of a given micromirror, based on an incidence angle of light emanating from a given group of photo-sensitive cells of the second display region being incident upon the optical element and a refraction angle of the light after being re-directed by the given mirror towards the given eye of the at least one user. Herein, the angle of incidence is with respect to a plane of the optical element, and not with respect to the given micromirror. The orientation of the given micromirror can be controlled by applying an electric field. In such a case, the micromirrors can be coated with electrostatically responsive materials; changes in the electric field cause the micromirrors to rotate or tilt. The technical benefit of controlling the optical element in such a case is that the selection of the intensity values for the pixels of the at least one image can be made easily, as compared to the case of the passive optical element. It will be appreciated that in case of the passive optical element, the orientation of the micromirrors is fixed, and the intensity values for the pixels of the at least one image are selected accordingly. In such a case, the orientation of all the micromirrors could be in a same direction. How these intensity values can be selected will be described later in more detail.

There will now be described how the optical element is controlled at a level of photo-emitting cells, and how an autostereoscopic view is presented to the at least one user in the case of the active optical element. Optionally, the at least one processor is configured to control the optical element by:
controlling a first part of the optical element upon which first light emanating from a first photo-emitting cell of the second display region is incident, to re-direct the first light towards the first eye of the at least one user, based on the relative location of the first eye with respect to the optical element;
controlling a second part of the optical element upon which second light emanating from a second photo-emitting cell of the second display region is incident, to re-direct the second light towards the second eye of the at least one user, based on the relative location of the second eye with respect to the optical element; and
controlling the first part and the second part of the optical element to allow third light emanating from a third photo-emitting cell of the first display region to be directed towards the first eye and the second eye, respectively, without bending.

As a result, the first eye sees a combination of the first light and the third light, while the second eye sees a combination of the second light and the third light. This allows for presenting different intensities to different eyes of the at least one user, thereby presenting the autostereoscopic view.

There will now be described how an autostereoscopic view is presented to the at least one user in the case of the passive optical element. Optionally, a first part of the optical element is employed to re-direct first light emanating from a first photo-emitting cell of the second display region towards the first eye of the at least one user, and a second part of the optical element is employed to re-direct second light emanating from a second photo-emitting cell of the second display region towards the second eye of the at least one user, wherein the first part and the second part of the optical element are employed to allow third light emanating from a third photo-emitting cell of the first display region to be directed towards the first eye and the second eye, respectively, without bending. As a result, the first eye sees the combination of the first light and the third light, while the second eye sees the combination of the second light and the third light. This allows for presenting different intensities to the different eyes of the at least one user, thereby presenting the autostereoscopic view.

Irrespective of whether the optical element is active or passive, respective intensities of the first light, the second light and the third light correspond to respective intensity values of pixels of the at least one image. Optionally, in this regard, a first pixel, a second pixel and a third pixel of the at least one image correspond to the first photo-emitting cell, the second photo-emitting cell, and the third photo-emitting cell, wherein when generating the at least one image, the at least one processor is configured to generate a first intensity value, a second intensity value and a third intensity value for the first pixel, the second pixel and the third pixel of the at least one image, respectively, based on a first output intensity value and a second output intensity value of a given 3D point in the first virtual image and the second virtual image, respectively. The first output intensity value and the second output intensity value of the given 3D point are determined from the first virtual image and the second virtual image, based on a viewing direction of the given 3D point from the first eye and the second eye. It will be appreciated that irrespective of whether the optical element is passive or active, such generation of the first intensity value, the second intensity value and the third intensity value for the first pixel, the second pixel and the third pixel of the at least one image can be performed by solving linear equations. Additionally or alternatively, the aforesaid intensity values can also be generated by employing a gradient descent process.

In some cases, the first output intensity value and the second output intensity value can be adjusted to achieve a better overall image quality, for example, by sacrificing contrast to some extent. As an example, if the first output intensity value and the second output intensity value of the given 3D point correspond to white (255, 255, 255) for the first eye and full black (0, 0, 0) for the second eye, there is no combination of the first intensity value, the second intensity value and the third intensity value for the first pixel, the second pixel and the third pixel of the at least one image that would result in 100 percent accurate results when combined. In such a case, the first output intensity value and the second output intensity value can be compressed, for example from a range of 0-255 to another range of 64-192. Accordingly, the first intensity value, the second intensity value and the third intensity value (for the first pixel, the second pixel and the third pixel of the at least one image) can be set as (0, 0, 0), (255, 255, 255) and (128, 128, 128), respectively.

It will also be appreciated that not only there will be linear equations corresponding to each 3D point in the first virtual image and the second virtual image, but also there will be interdependencies in these linear equations. This is primarily due to a fact that a particular photo-sensitive cell in the first display region is utilised to generate two different pixels in the first virtual image and two different pixels in the second virtual image; similarly, a particular photo-sensitive cell in the second display region is utilised to generate two different pixels in the first virtual image and two different pixels in the second virtual image. So, there are two one-to-many mappings between these photo-sensitive cells and the pixels they present.

In this regard, there will now be described how the autostereoscopic view is presented to the at least one user in the case of the active optical element. Optionally, the at least one processor is configured to control the optical element by:
controlling another first part of the optical element upon which the first light emanating from the first photo-emitting cell of the second display region is incident, to re-direct the first light towards the second eye of the at least one user, based on the relative location of the second eye with respect to the optical element;
controlling another second part of the optical element upon which the second light emanating from the second photo-emitting cell of the second display region is incident, to re-direct the second light towards the first eye of the at least one user, based on the relative location of the first eye with respect to the optical element; and
controlling the another first part and the another second part of the optical element to allow fourth light emanating from a fourth photo-emitting cell of the first display region to be directed towards the first eye and the second eye, respectively, without bending.

Thus, the first eye sees a combination of the second light and the fourth light, while the second eye sees a combination of the first light and the fourth light.

Similarly, there will now be described how the autostereoscopic view is presented to the at least one user in the case of the passive optical element. Optionally, another first part of the optical element is employed to re-direct the first light emanating from the first photo-emitting cell of the second display region towards the second eye of the at least one user, and another second part of the optical element is employed to re-direct the second light emanating from the second photo-emitting cell of the second display region towards the first eye of the at least one user, wherein the another first part and the another second part of the optical element are employed to allow fourth light emanating from a fourth photo-emitting cell of the first display region to be directed towards the first eye and the second eye, respectively, without bending.

Irrespective of whether the optical element is active or passive, respective intensities of the first light, the second light, the third light and the fourth light correspond to respective intensity values of pixels of the at least one image. Optionally, in this regard, a first pixel, a second pixel, a third pixel and a fourth pixel of the at least one image correspond to the first photo-emitting cell, the second photo-emitting cell, the third photo-emitting cell and the fourth photo-emitting cell, wherein when generating the at least one image, the at least one processor is configured to generate a first intensity value, a second intensity value, a third intensity value and a fourth intensity value for the first pixel, the second pixel, the third pixel and the fourth pixel of the at least one image, respectively, based on a first output intensity value and a second output intensity value of a given 3D point in the first virtual image and the second virtual image, respectively, and a first output intensity value and a second output intensity value of another given 3D point in the first virtual image and the second virtual image, respectively, wherein the given 3D point corresponds to the first part and the second part of the optical element, while the another given 3D point corresponds to the another first part and the another second part of the optical element. As mentioned earlier, such generation of the intensity values can be performed by solving linear equations.

Moreover, optionally, the system further comprising gaze-tracking means, wherein the at least one processor is configured to:
utilise the gaze-tracking means to determine gaze directions of the eyes of the at least one user;
detect when the first part and the second part of the optical element correspond to the gaze directions of the eyes of the at least one user, but the another first part and the another second part of the optical element do not correspond to the gaze directions of the eyes of the at least one user; and
when it is detected that the first part and the second part of the optical element correspond to the gaze directions, but the another first part and the another second part of the optical element do not correspond to the gaze directions, prioritise minimising a visual error in output intensity values produced for the given 3D point over output intensity values produced for the another given 3D point.

Optionally, the tracking means is implemented as the gaze-tracking means. In such a case, the at least one processor is configured to utilise the tracking data collected by the tracking means, for determining the gaze directions of the eyes of the at least one user. This allows for detecting when the first part and the second part of the optical element correspond to the gaze directions of the eyes of the at least one user, but the another first part and the another second part of the optical element do not correspond to the gaze directions of the eyes of the at least one user. Optionally, in this regard, when the tracking data comprises a plurality of images of a given eye of a given user from amongst the plurality of users, the at least one processor is configured to: extract a plurality of features of the given eye from a given image; identify at least one of: a pupil of the given eye, a position of the pupil with respect to corners of the given eye, a curvature of an eyelid of the given eye, a position of an eyelash of the given eye, a shape of the given eye, a size of the given eye, based on the plurality of features, to determine the gaze directions and optionally, to detect when the given eye of the given user is closed. Gaze tracking is well-known in the art.

When it is detected that the first part and the second part of the optical element correspond to the gaze directions of the eyes of the at least one user, but the another first part and the another second part of the optical element do not correspond to the gaze directions of the eyes of the at least one user, it means that a part of the virtual content presented by the first part and the second part of the optical element corresponds to a region of interest within a field of view of the at least one user, while another part of the virtual content presented by the another first part and the another second part of the optical element is not a part of the region of interest of the at least one user. Therefore, minimising the visual error in the output intensity values produced for the given 3D point are prioritised over the output intensity values produced for the another given 3D point. A technical benefit of such prioritising is that the linear equations can be simplified, thereby making the processing easier. In other words, processing resources and processing time of the at least one processor would not be wasted in solving complex interdependent linear equations, when they are not even required (namely, when the another part of the virtual content presented by the another first part and the another second part of the optical element is not a part of the region of interest of the at least one user). This is based on a fact that humans perceive colours more accurately in the region of interest (namely, a region where they are looking), as compared to a remaining region of their field of view.

Furthermore, in some implementations, the system further comprises an optical combiner arranged on the optical path of the display unit and on an optical path of a real-world light field of a real-world environment. In such implementations, the optical element is arranged between the display unit and the optical combiner on the optical path. The optical combiner is employed to reflect the light received from the optical element towards the first eye and the second eye of the at least one user, whilst optically combining said light with the real-world light field. In such a case, the relative location of the eyes of the at least one user can be first determined with respect to the optical combiner. The relative location of the eyes with respect to the optical element can then be determined based on the relative location of the eyes with respect to the optical combiner, and the relative location of the optical combiner with respect to the optical element. Optionally, the optical combiner is implemented as at least one of: a lens, a mirror, a semi-transparent mirror, a semi-transparent film, a semi-transparent flexible membrane, a prism, a beam splitter, an optical waveguide, a polarizer. Optical combiners are well-known in the art. Optionally, a tilt angle of the optical combiner with respect to an image plane of the display unit lies in a range of 30 degrees and 60 degrees.

Optionally, in such implementations, the at least one processor is configured to:
determine an intensity of a part of the real-world light field passing through a part of the optical combiner from which the first light emanating from the first photo-emitting cell and the third light emanating from the third photo-emitting cell reflect towards the first eye;
detect when the intensity of the part of the real-world light field passing through the part of the optical combiner is lower than the first output intensity value of the given 3D point; and
when it is detected that the intensity of said part of the real-world light field is lower than the first output intensity value of the given 3D point, adjust the first intensity value of the first pixel and the third intensity value of the third pixel, based on a difference between the first output intensity value of the given 3D point and the intensity of said part of the real-world light field.

When the intensity of the part of the real-world light field (passing through the part of the optical combiner) is lower than the first output intensity value of the given 3D point, the intensity of the part of the real-world light field can be leveraged to produce at least a part of an overall intensity corresponding to the first output intensity value. Therefore, the first intensity value of the first pixel and the third intensity value of the third pixel can be adjusted to only produce the difference between the overall intensity and the intensity of said part of the real-world light field. Advantageously, this facilitates in reducing power consumption of the display unit. This technical advantage is applicable, irrespective of whether the optical element is passive or active. Herein, the term "overall intensity" refers to an intensity of the synthetic light field that was originally intended to be presented to the at least one user. The overall intensity depends on the first output intensity value of the given 3D point.

The intensity of the part of the real-world light field (passing through the part of the optical combiner) can be determined by:
utilising at least one real-world-facing camera of the system to capture at least one 2D real-world image of the real-world environment,
reprojecting the at least one 2D real-world image from a perspective of the at least one real-world-facing camera to a perspective of the viewpoint of the given eye (for example, using depth data from a separate depth camera, or from a stereo disparity analysis of a pair of visible-light images of the real-world environment captured by a pair of visible-light cameras implemented as the at least one real-world-facing camera, or similar), and
mapping a viewing direction of the part of the optical combiner from the given eye with viewing directions of pixels in a reprojected version of the at least one 2D real-world image from the given eye.

Similarly, optionally, the at least one processor is configured to:
determine an intensity of a part of the real-world light field passing through a part of the optical combiner from which the second light emanating from the second photo-emitting cell and the third light emanating from the third photo-emitting cell pass towards the first eye;
detect when the intensity of the part of the real-world light field passing through the part of the optical combiner is lower than the second output intensity value of the given 3D point; and
when it is detected that the intensity of said part of the real-world light field is lower than the second output intensity value of the given 3D point, adjust the second intensity value of the second pixel and the third intensity value of the third pixel, based on a difference between the second output intensity value of the given 3D point and the intensity of said part of the real-world light field.

It will be appreciated that such adjusting of the first intensity value of the first pixel, the second intensity value of the second pixel and the third intensity value of the third pixel can be performed by adjusting the aforementioned linear equations.

Moreover, optionally, the at least one processor is configured to:
determine intensities of different parts of the real-world light field passing through the optical combiner towards a given eye;
detect when an intensity of a given part of the real-world light field passing through a given part of the optical combiner towards the given eye is greater than a predefined threshold intensity; and
when it is detected the intensity of the given part of the real-world light field passing through the given part of the optical combiner towards the given eye is greater than the predefined threshold intensity, dim pixels of the first display region and the second display region on whose optical path the given part of the optical combiner lies.

The aforementioned steps can be performed for each eye of the at least one user. In this regard, the intensities of the different parts of the real-world light field passing through the optical combiner towards the given eye can be determined as described earlier. As an example, said intensities can be determined in lux values. The predefined threshold intensity may, for example, lie in a range of 10000 lux to 25000 lux.

A technical benefit of dimming the pixels in such a case is that ghosting artefacts can be hidden in those part(s) of the optical combiner where the real-world light field has a relatively bright intensity (such that the virtual content would not be visible anyway). This also reduces the power consumption of the display unit.

The present disclosure also relates to the method as described above. Various embodiments and variants disclosed above, with respect to the aforementioned first aspect, apply mutatis mutandis to the method.

Optionally, when the optical element is made of the birefringent material, the method further comprises controlling a polarization orientation of light emanating from a given group of photo-sensitive cells of the second display region, based on a birefringence of the birefringent material, an incidence angle of said light being incident upon a given part of the optical element and a refraction angle of the light after being re-directed by the given part of the optical element towards a given eye of the at least one user.

Optionally, when the optical element is made of the birefringent material, the birefringent material comprises a liquid crystal material, wherein the method further comprises controlling the optical element by controlling a refractive index of the liquid crystal material in a given part of the optical element, based on an incidence angle of light emanating from a given group of photo-sensitive cells of the second display region being incident upon the given part of the optical element and a refraction angle of the light after being re-directed by the given part of the optical element towards a given eye of the at least one user.

Alternatively, optionally, when the optical element is made of the metamaterial, the optical element is semi-transparent and comprises micromirrors, wherein the method further comprises controlling the optical element by controlling an orientation of a given micromirror, based on an incidence angle of light emanating from a given group of photo-sensitive cells of the second display region being incident upon the optical element and a refraction angle of the light after being re-directed by the given mirror towards a given eye of the at least one user.

Optionally, the method further comprises controlling the optical element by:
controlling a first part of the optical element upon which first light emanating from a first photo-emitting cell of the second display region is incident, to re-direct the first light towards the first eye of the at least one user, based on the relative location of the first eye with respect to the optical element;
controlling a second part of the optical element upon which second light emanating from a second photo-emitting cell of the second display region is incident, to re-direct the second light towards the second eye of the at least one user, based on the relative location of the second eye with respect to the optical element; and
controlling the first part and the second part of the optical element to allow third light emanating from a third photo-emitting cell of the first display region to be directed towards the first eye and the second eye, respectively, without bending.

Optionally, in this regard, a first pixel, a second pixel and a third pixel of the at least one image correspond to the first photo-emitting cell, the second photo-emitting cell, and the third photo-emitting cell, wherein the step of generating the at least one image comprises generating a first intensity value, a second intensity value and a third intensity value for the first pixel, the second pixel and the third pixel of the at least one image, respectively, based on a first output intensity value and a second output intensity value of a given 3D point in the first virtual image and the second virtual image, respectively.

Moreover, optionally, the method further comprises:
controlling another first part of the optical element upon which the first light emanating from the first photo-emitting cell of the second display region is incident, to re-direct the first light towards the second eye of the at least one user, based on the relative location of the second eye with respect to the optical element;
controlling another second part of the optical element upon which the second light emanating from the second photo-emitting cell of the second display region is incident, to re-direct the second light towards the first eye of the at least one user, based on the relative location of the first eye with respect to the optical element; and
controlling the another first part and the another second part of the optical element to allow fourth light emanating from a fourth photo-emitting cell of the first display region to be directed towards the first eye and the second eye, respectively, without bending.

Optionally, in this regard, a first pixel, a second pixel, a third pixel and a fourth pixel of the at least one image correspond to the first photo-emitting cell, the second photo-emitting cell, the third photo-emitting cell and the fourth photo-emitting cell, wherein the step of generating the at least one image comprises generating a first intensity value, a second intensity value, a third intensity value and a fourth intensity value for the first pixel, the second pixel, the third pixel and the fourth pixel of the at least one image, respectively, based on a first output intensity value and a second output intensity value of a given 3D point in the first virtual image and the second virtual image, respectively, and a first output intensity value and a second output intensity value of another given 3D point in the first virtual image and the second virtual image, respectively, wherein the given 3D point corresponds to the first part and the second part of the optical element, while the another given 3D point corresponds to the another first part and the another second part of the optical element.

Optionally, the method further comprises:
utilising gaze-tracking means to determine gaze directions of the eyes of the at least one user;
detecting when the first part and the second part of the optical element correspond to the gaze directions of the eyes of the at least one user, but the another first part and the another second part of the optical element do not correspond to the gaze directions of the eyes of the at least one user; and
when it is detected that the first part and the second part of the optical element correspond to the gaze directions, but the another first part and the another second part of the optical element do not correspond to the gaze directions, prioritising minimising a visual error in output intensity values produced for the given 3D point over output intensity values produced for the another given 3D point.

Furthermore, in some implementations, an optical combiner is arranged on the optical path of the display unit and on an optical path of a real-world light field of a real-world environment, wherein the optical combiner is employed to reflect the light received from the optical element towards the first eye and the second eye of the at least one user, whilst optically combining said light with the real-world light field. Optionally, in such implementations, the method further comprises:
determining an intensity of a part of the real-world light field passing through a part of the optical combiner from which the first light emanating from the first photo-emitting cell and the third light emanating from the third photo-emitting cell pass towards the first eye;
detecting when the intensity of the part of the real-world light field passing through the part of the optical combiner is lower than the first output intensity value of the given 3D point; and
when it is detected that the intensity of said part of the real-world light field is lower than the first output intensity value of the given 3D point, adjusting the first intensity value of the first pixel and the third intensity value of the third pixel, based on a difference between the first output intensity value of the given 3D point and the intensity of said part of the real-world light field.

Moreover, optionally, the method further comprises:
determining intensities of different parts of the real-world light field passing through the optical combiner towards a given eye;
detecting when an intensity of a given part of the real-world light field passing through a given part of the optical combiner towards the given eye is greater than a predefined threshold intensity; and
when it is detected the intensity of the given part of the real-world light field passing through the given part of the optical combiner towards the given eye is greater than the predefined threshold intensity, dimming pixels of the first display region and the second display region on whose optical path the given part of the optical combiner lies.

### DETAILED DESCRIPTION OF THE DRAWINGS

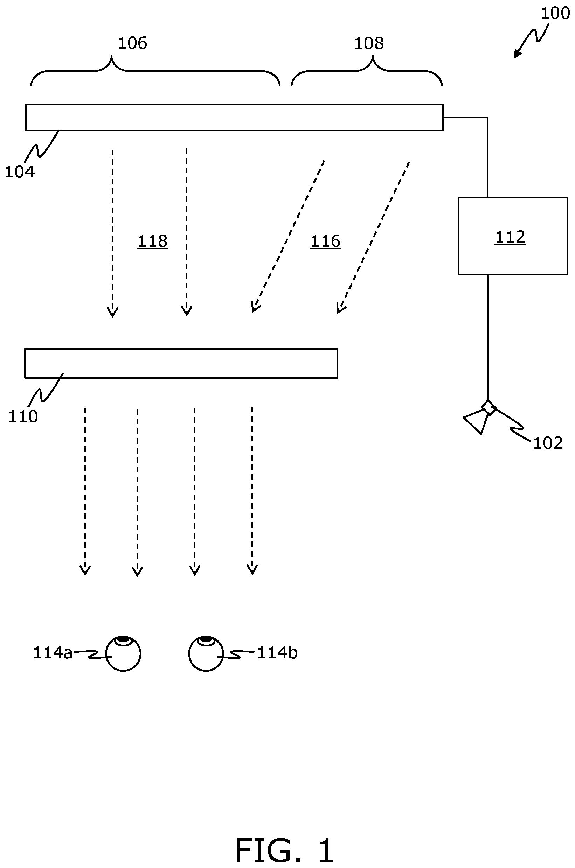

Referring to FIG. 1, illustrated is an example implementation of a system **100** incorporating light field display using a birefringent material or a metamaterial, in accordance with an embodiment of the present disclosure. The system **100** comprises tracking means **102,** a display unit **104** comprising a first display region **106** and a second display region **108,** an optical element **110** arranged on an optical path of the display unit **104,** and at least one processor (depicted as a processor **112).** The optical element **110** can be made of any one of: (i) a birefringent material, (ii) a metamaterial. The processor **112** is configured to:
utilise the tracking means **102** to determine a relative location of a first eye **114a** and of a second eye **114b** of at least one user with respect to the optical element **110;**
obtain a first virtual image and a second virtual image to be presented to the first eye **114a** and the second eye **114b** of the at least one user, respectively, based on the relative location of the first eye **114a** and of the second eye **114b** of the at least one user with respect to the optical element **110;**
generate at least one image to be employed at the display unit **104,** based on the first virtual image, the second virtual image, the relative location of the first eye **114a** and of the second eye **114b** of the at least one user with respect to the optical element **110,** and a relative location of the optical element **110** with respect to the first display region **106** and the second display region **108;** and
display the at least one image via the display unit **104.**

The optical element **110** is employed to re-direct light **116** emanating from photo-emitting cells on the second display region **108** to bend towards the first eye **114a** and the second eye **114b** of the at least one user, whilst allowing light **118** emanating from photo-emitting cells on the first display region **106** to be incident upon the first eye **114a** and the second eye **114b** of the at least one user without bending.

It may be understood by a person skilled in the art that FIG. 1 includes a simplified example implementation of the system **100,** for sake of clarity, which should not unduly limit the scope of the claims herein. It is to be understood that the specific implementation of the system **100** is not to be construed as limiting it to specific numbers or types of tracking means, display units, second regions, optical elements, and processors. The person skilled in the art will recognize many variations, alternatives, and modifications of embodiments of the present disclosure.

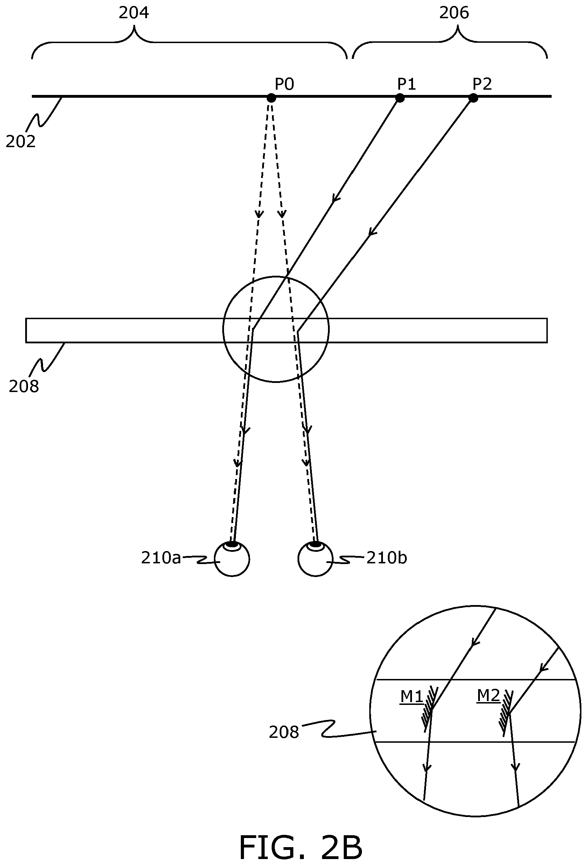

Referring to FIGs. 2A and 2B, there is illustrated how autostereoscopic view is achieved, pursuant to embodiments of the present disclosure. There is shown a display unit **202** comprising a first display region **204** and a second display region **206,** and an optical element **208.** There are also shown a photo-emitting cell **P0** (from amongst a plurality of photo-emitting cells) of the first display region **204,** and two photo-emitting cells **P1** and **P2** (from amongst a plurality of photo-emitting cells) of the second display region **206.** The optical element **208** is employed to re-direct light emanating from the photo-emitting cells **P1** and **P2** on the second display region **206** to bend towards the first eye **210a** and the second eye **210b** of a given user, respectively, whilst allowing light emanating from the photo-emitting cell **P0** on the first display region **204** to be incident upon the first eye **210a** and the second eye **210b** of the given user without bending. Irrespective of whether the optical element **208** is passive or active, the optical element **208** acts as a birefringent combiner that combines the light emanating from the photo-sensitive cell **P0** of the first display region **204** with the light emanating from the photo-sensitive cells **P1** and **P2** of the second display region **206,** and passes said combinations towards the first eye **210a** and the second eye **210b,** respectively.

With reference to FIG. 2A, the optical element **208** is made of a birefringent material. With reference to FIG. 2B, the optical element **208** is made of a metamaterial; in such a case, the optical element **208** is semi-transparent and comprises micromirrors (not shown for the sake of simplicity). In FIG. 2B, there is also depicted an optical interaction of the light emanating from the photo-sensitive cells **P1** and **P2** with a portion of the optical element **208;** micromirrors **M1** and **M2** have been shown as a part of said portion of the optical element **208.**

FIGs. 3A and 3B depict different implementations of a display unit **300,** in accordance with an embodiment of the present disclosure. The display unit **300** comprises a first display region **302** and a second display region **304.** As shown, the second display region **304** surrounds the first display region **302.** The second display region **304** can be in a form of a single continuous display region, or could be in a form of separate display regions that are arranged to surround the first display region **302.**

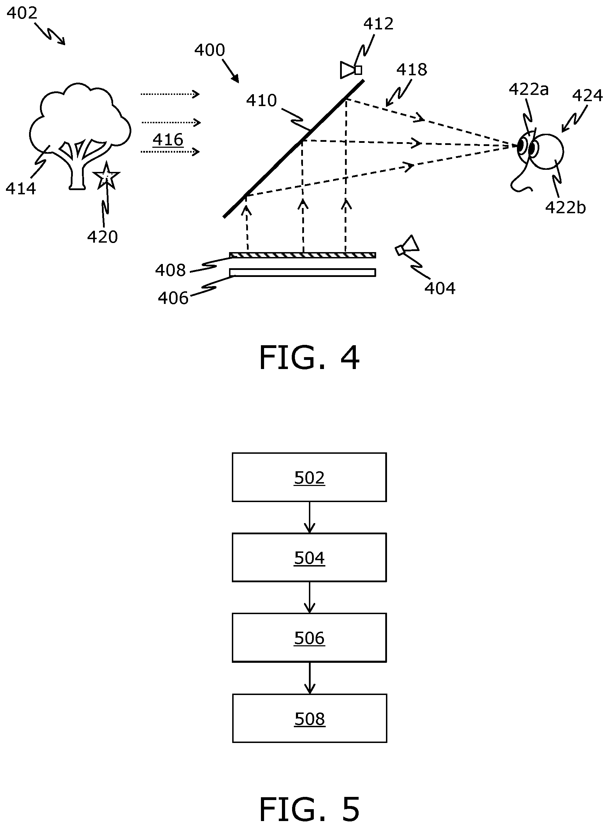

FIG. 4 depicts an implementation of a system **400** incorporating light field display using a birefringent material or a metamaterial within a real-world environment **402,** in accordance with an embodiment of the present disclosure. The system **400** comprises tracking means **404,** a display unit **406** comprising a first display region and a second display region (not shown for the sake of simplicity), an optical element **408** arranged on an optical path of the display unit **406,** and at least one processor (not shown). The at least one processor is configured to perform various operations as described earlier. Optionally, in this implementation, the system **400** further comprises an optical combiner **410** and a real-world-facing camera **412.** In the real-world environment **402,** there is at least one real-world object, depicted as a real-world object **414** (shown as a tree, for illustration purposes only). The optical combiner **410** is arranged on the optical path of the display unit **406** and on an optical path of a real-world light field **416** of the real-world environment **402.** The optical combiner **410** is employed to reflect a synthetic light field **418** presenting virtual content **420** (shown as a star, for illustration purposes only) produced by the display unit **406** and the optical element **408** towards a first eye **422a** and a second eye **422b** of at least one user (depicted as a user 424), whilst optically combining the synthetic light field **418** with the real-world light field **416.**

FIGs. 2A-2B, 3A-3B and 4 are merely examples, which should not unduly limit the scope of the claims herein. A person skilled in the art will recognize many variations, alternatives, and modifications of embodiments of the present disclosure.

Referring to FIG. 5, illustrated are steps of a method incorporating light field display using a birefringent material or a metamaterial, in accordance with an embodiment of the present disclosure. At step **502,** tracking means is utilised to determine a relative location of a first eye and of a second eye of at least one user with respect to an optical element, the optical element being arranged on an optical path of a display unit comprising a first display region and a second display region, the optical element being made of any one of: (i) a birefringent material, (ii) a metamaterial. At step **504,** a first virtual image and a second virtual image to be presented to the first eye and the second eye of the at least one user are obtained, based on the relative location of the first eye and of the second eye of the at least one user with respect to the optical element, respectively. At step **506,** at least one image to be employed at the display unit is generated, based on the first virtual image, the second virtual image, the relative location of the first eye and of the second eye of the at least one user with respect to the optical element, and a relative location of the optical element with respect to the first display region and the second display region. At step **508,** the at least one image is displayed via the display unit. The optical element is employed to re-direct light emanating from photo-emitting cells on the second display region to bend towards the first eye and the second eye of the at least one user, whilst allowing light emanating from photo-emitting cells on the first display region to be incident upon the first eye and the second eye of the at least one user without bending.

The aforementioned steps are only illustrative and other alternatives can also be provided where one or more steps are added, one or more steps are removed, or one or more steps are provided in a different sequence without departing from the scope of the claims herein.

## Claims

1. A system (100, 400) comprising:
tracking means (102, 404);
a display unit (104, 202, 300, 406) comprising a first display region (106, 204, 302) and a second display region (108, 206, 304);
an optical element (110, 208, 408) arranged on an optical path of the display unit, the optical element being made of any one of: (i) a birefringent material, (ii) a metamaterial; and
at least one processor (112) configured to:
utilise the tracking means to determine a relative location of a first eye (114a, 210a, 422a) and of a second eye (114b, 210b, 422b) of at least one user with respect to the optical element;
obtain a first virtual image and a second virtual image to be presented to the first eye and the second eye of the at least one user, respectively, based on the relative location of the first eye and of the second eye of the at least one user with respect to the optical element;
generate at least one image to be employed at the display unit, based on the first virtual image, the second virtual image, the relative location of the first eye and of the second eye of the at least one user with respect to the optical element, and a relative location of the optical element with respect to the first display region and the second display region; and
display the at least one image via the display unit,
wherein the optical element is employed to re-direct light (116) emanating from photo-emitting cells on the second display region to bend towards the first eye and the second eye of the at least one user, whilst allowing light (118) emanating from photo-emitting cells on the first display region to be incident upon the first eye and the second eye of the at least one user without bending.

2. The system (100, 400) of claim 1, wherein the optical element (110, 208, 408) is made of the birefringent material, wherein the at least one processor (112) is configured to control a polarization orientation of light (116) emanating from a given group of photo-sensitive cells of the second display region (108, 206, 304), based on a birefringence of the birefringent material, an incidence angle of said light being incident upon a given part of the optical element and a refraction angle of the light after being re-directed by the given part of the optical element towards a given eye of the at least one user.

3. The system (100, 400) of any of the preceding claims, wherein the optical element (110, 208, 408) is actively controllable.

4. The system (100, 400) of claim 3, wherein when the optical element (110, 208, 408) is made of the birefringent material, the birefringent material comprises a liquid crystal material, wherein the at least one processor (112) is configured to control the optical element by controlling a refractive index of the liquid crystal material in a given part of the optical element, based on an incidence angle of light (116) emanating from a given group of photo-sensitive cells of the second display region (108, 206, 304) being incident upon the given part of the optical element and a refraction angle of the light after being re-directed by the given part of the optical element towards a given eye of the at least one user.

5. The system (100, 400) of claim 3, wherein when the optical element (110, 208, 408) is made of the metamaterial, the optical element is semi-transparent and comprises micromirrors (M1, M2), wherein the at least one processor (112) is configured to control the optical element by controlling an orientation of a given micromirror (M1, M2), based on an incidence angle of light (116) emanating from a given group of photo-sensitive cells of the second display region (108, 206, 304) being incident upon the optical element and a refraction angle of the light after being re-directed by the given mirror towards a given eye of the at least one user.

6. The system (100, 400) of any of claims 3-5, wherein the at least one processor (112) is configured to control the optical element (110, 208, 408) by:
controlling a first part of the optical element upon which first light emanating from a first photo-emitting cell (P1) of the second display region (108, 206, 304) is incident, to re-direct the first light towards the first eye (114a, 210a, 422a) of the at least one user, based on the relative location of the first eye with respect to the optical element;
controlling a second part of the optical element upon which second light emanating from a second photo-emitting cell (P2) of the second display region is incident, to re-direct the second light towards the second eye (114b, 210b, 422b) of the at least one user, based on the relative location of the second eye with respect to the optical element; and
controlling the first part and the second part of the optical element to allow third light emanating from a third photo-emitting cell (P0) of the first display region (106, 204, 302) to be directed towards the first eye and the second eye, respectively, without bending.

7. The system (100, 400) of any of claims 1-2, wherein a first part of the optical element (110, 208, 408) is employed to re-direct first light emanating from a first photo-emitting cell (P1) of the second display region (108, 206, 304) towards the first eye (114a, 210a, 422a) of the at least one user, and a second part of the optical element is employed to re-direct second light emanating from a second photo-emitting cell (P2) of the second display region towards the second eye (114b, 210b, 422b) of the at least one user,
wherein the first part and the second part of the optical element are employed to allow third light emanating from a third photo-emitting cell (P0) of the first display region (106, 204, 302) to be directed towards the first eye and the second eye, respectively, without bending.

8. The system (100, 400) of claim 6 or 7, wherein a first pixel, a second pixel and a third pixel of the at least one image correspond to the first photo-emitting cell (P1), the second photo-emitting cell (P2), and the third photo-emitting cell (P0), wherein when generating the at least one image, the at least one processor (112) is configured to generate a first intensity value, a second intensity value and a third intensity value for the first pixel, the second pixel and the third pixel of the at least one image, respectively, based on a first output intensity value and a second output intensity value of a given 3D point in the first virtual image and the second virtual image, respectively.

9. The system (100, 400) of claim 8, further comprising an optical combiner (410) arranged on the optical path of the display unit (104, 202, 300, 406) and on an optical path of a real-world light field (416) of a real-world environment, wherein the optical combiner is employed to reflect the light (418) received from the optical element (110, 208, 408) towards the first eye (114a, 210a, 422a) and the second eye (114b, 210b, 422b) of the at least one user, whilst optically combining said light with the real-world light field,
wherein the at least one processor (112) is configured to:
determine an intensity of a part of the real-world light field passing through a part of the optical combiner from which the first light emanating from the first photo-emitting cell (P1) and the third light emanating from the third photo-emitting cell (P0) pass towards the first eye;
detect when the intensity of the part of the real-world light field passing through the part of the optical combiner is lower than the first output intensity value of the given 3D point; and
when it is detected that the intensity of said part of the real-world light field is lower than the first output intensity value of the given 3D point, adjust the first intensity value of the first pixel and the third intensity value of the third pixel, based on a difference between the first output intensity value of the given 3D point and the intensity of said part of the real-world light field.

10. The system (100, 400) of any of claims 6, 8 or 9, wherein the at least one processor (112) is configured to control the optical element (110, 208, 408) by:
controlling another first part of the optical element upon which the first light emanating from the first photo-emitting cell (P1) of the second display region (108, 206, 304) is incident, to re-direct the first light towards the second eye (114b, 210b, 422b) of the at least one user, based on the relative location of the second eye with respect to the optical element;
controlling another second part of the optical element upon which the second light emanating from the second photo-emitting cell (P2) of the second display region is incident, to re-direct the second light towards the first eye (114a, 210a, 422a) of the at least one user, based on the relative location of the first eye with respect to the optical element; and
controlling the another first part and the another second part of the optical element to allow fourth light emanating from a fourth photo-emitting cell of the first display region (106, 204, 302) to be directed towards the first eye and the second eye, respectively, without bending.

11. The system (100, 400) of any of claims 7, 8 or 9, wherein another first part of the optical element (110, 208, 408) is employed to re-direct the first light emanating from the first photo-emitting cell (P1) of the second display region (108, 206, 304) towards the second eye (114b, 210b, 422b) of the at least one user, and another second part of the optical element is employed to re-direct the second light emanating from the second photo-emitting cell (P2) of the second display region towards the first eye (114a, 210a, 422a) of the at least one user,
wherein the another first part and the another second part of the optical element are employed to allow fourth light emanating from a fourth photo-emitting cell of the first display region (106, 204, 302) to be directed towards the first eye and the second eye, respectively, without bending.

12. The system (100, 400) of claim 10 or 11, wherein a first pixel, a second pixel, a third pixel and a fourth pixel of the at least one image correspond to the first photo-emitting cell (P1), the second photo-emitting cell (P2), the third photo-emitting cell (P0) and the fourth photo-emitting cell, wherein when generating the at least one image, the at least one processor (112) is configured to generate a first intensity value, a second intensity value, a third intensity value and a fourth intensity value for the first pixel, the second pixel, the third pixel and the fourth pixel of the at least one image, respectively, based on a first output intensity value and a second output intensity value of a given 3D point in the first virtual image and the second virtual image, respectively, and a first output intensity value and a second output intensity value of another given 3D point in the first virtual image and the second virtual image, respectively, wherein the given 3D point corresponds to the first part and the second part of the optical element (110, 208, 408), while the another given 3D point corresponds to the another first part and the another second part of the optical element.

13. The system (100, 400) of claim 12, further comprising gaze-tracking means (102, 404), wherein the at least one processor (112) is configured to:
utilise the gaze-tracking means to determine gaze directions of the eyes of the at least one user;
detect when the first part and the second part of the optical element (110, 208, 408) correspond to the gaze directions of the eyes of the at least one user, but the another first part and the another second part of the optical element do not correspond to the gaze directions of the eyes of the at least one user; and
when it is detected that the first part and the second part of the optical element correspond to the gaze directions, but the another first part and the another second part of the optical element do not correspond to the gaze directions, prioritise minimising a visual error in output intensity values produced for the given 3D point over output intensity values produced for the another given 3D point.

14. The system (100, 400) of any of the preceding claims, further comprising an optical combiner (410) arranged on the optical path of the display unit (104, 202, 300, 406) and on an optical path of a real-world light field (416) of a real-world environment, wherein the optical combiner is employed to reflect the light (418) received from the optical element (110, 208, 408) towards the first eye (114a, 210a, 422a) and the second eye (114b, 210b, 422b) of the at least one user, whilst optically combining said light with the real-world light field,
wherein the at least one processor (112) is configured to:
determine intensities of different parts of the real-world light field passing through the optical combiner towards a given eye;
detect when an intensity of a given part of the real-world light field passing through a given part of the optical combiner towards the given eye is greater than a predefined threshold intensity; and
when it is detected the intensity of the given part of the real-world light field passing through the given part of the optical combiner towards the given eye is greater than the predefined threshold intensity, dim pixels of the first display region (106, 204, 302) and the second display region (108, 206, 304) on whose optical path the given part of the optical combiner lies.

15. A method comprising:
utilising tracking means (102, 404) to determine a relative location of a first eye (114a, 210a, 422a) and of a second eye (114b, 210b, 422b) of at least one user with respect to an optical element (110, 208, 408), the optical element being arranged on an optical path of a display unit (104, 202, 300, 406) comprising a first display region (106, 204, 302) and a second display region (108, 206, 304), the optical element being made of any one of: (i) a birefringent material, (ii) a metamaterial;
obtaining a first virtual image and a second virtual image to be presented to the first eye and the second eye of the at least one user, respectively, based on the relative location of the first eye and of the second eye of the at least one user with respect to the optical element;
generating at least one image to be employed at the display unit, based on the first virtual image, the second virtual image, the relative location of the first eye and of the second eye of the at least one user with respect to the optical element, and a relative location of the optical element with respect to the first display region and the second display region; and
displaying the at least one image via the display unit,
wherein the optical element is employed to re-direct light (116) emanating from photo-emitting cells on the second display region to bend towards the first eye and the second eye of the at least one user, whilst allowing light (118) emanating from photo-emitting cells on the first display region to be incident upon the first eye and the second eye of the at least one user without bending.

16. The method of claim 15, wherein when the optical element (110, 208, 408) is made of the birefringent material, the birefringent material comprises a liquid crystal material, wherein the method further comprises controlling the optical element by controlling a refractive index of the liquid crystal material in a given part of the optical element, based on an incidence angle of light (116) emanating from a given group of photo-sensitive cells of the second display region (108, 206, 304) being incident upon the given part of the optical element and a refraction angle of the light after being re-directed by the given part of the optical element towards a given eye of the at least one user.

17. The method of claim 15, wherein when the optical element (110, 208, 408) is made of the metamaterial, the optical element is semi-transparent and comprises micromirrors (M1, M2), wherein the method further comprises controlling the optical element by controlling an orientation of a given micromirror (M1, M2), based on an incidence angle of light (116) emanating from a given group of photo-sensitive cells of the second display region (108, 206, 304) being incident upon the optical element and a refraction angle of the light after being re-directed by the given mirror towards a given eye of the at least one user.

18. The method of claim 16 or 17, further comprising controlling the optical element (110, 208, 408) by:
controlling a first part of the optical element upon which first light emanating from a first photo-emitting cell (P1) of the second display region (108, 206, 304) is incident, to re-direct the first light towards the first eye (114a, 210a, 422a) of the at least one user, based on the relative location of the first eye with respect to the optical element;
controlling a second part of the optical element upon which second light emanating from a second photo-emitting cell (P2) of the second display region is incident, to re-direct the second light towards the second eye (114b, 210b, 422b) of the at least one user, based on the relative location of the second eye with respect to the optical element; and
controlling the first part and the second part of the optical element to allow third light emanating from a third photo-emitting cell (P0) of the first display region (106, 204, 302) to be directed towards the first eye and the second eye, respectively, without bending.

19. The method of claim 18, wherein a first pixel, a second pixel and a third pixel of the at least one image correspond to the first photo-emitting cell (P1), the second photo-emitting cell (P2), and the third photo-emitting cell (P0), wherein the step of generating the at least one image comprises generating a first intensity value, a second intensity value and a third intensity value for the first pixel, the second pixel and the third pixel of the at least one image, respectively, based on a first output intensity value and a second output intensity value of a given 3D point in the first virtual image and the second virtual image, respectively.

20. The method of claim 19, wherein an optical combiner (410) is arranged on the optical path of the display unit (104, 202, 300, 406) and on an optical path of a real-world light field (416) of a real-world environment, wherein the optical combiner is employed to reflect the light (418) received from the optical element (110, 208, 408) towards the first eye (114a, 210a, 422a) and the second eye (114b, 210b, 422b) of the at least one user, whilst optically combining said light with the real-world light field,
wherein the method further comprises:
determining an intensity of a part of the real-world light field passing through a part of the optical combiner from which the first light emanating from the first photo-emitting cell (P1) and the third light emanating from the third photo-emitting cell (P0) pass towards the first eye;
detecting when the intensity of the part of the real-world light field passing through the part of the optical combiner is lower than the first output intensity value of the given 3D point; and
when it is detected that the intensity of said part of the real-world light field is lower than the first output intensity value of the given 3D point, adjusting the first intensity value of the first pixel and the third intensity value of the third pixel, based on a difference between the first output intensity value of the given 3D point and the intensity of said part of the real-world light field.

## Patentansprüche

1. System (100, 400), umfassend:
Verfolgungsmittel (102, 404);
eine Anzeigeeinheit (104, 202, 300, 406), umfassend einen ersten Anzeigebereich (106, 204, 302) und einen zweiten Anzeigebereich (108, 206, 304);
ein optisches Element (110, 208, 408), das auf einem optischen Pfad der Anzeigeeinheit angeordnet ist, wobei das optische Element hergestellt ist aus einem von: (i) einem doppelbrechenden Material, (ii) einem Metamaterial; und
mindestens einem Prozessor (112), der konfiguriert ist zum:
Verwenden der Verfolgungsmittel, um eine relative Position eines ersten Auges (114a, 210a, 422a) und eines zweiten Auges (114b, 210b, 422b) mindestens eines Benutzers in Bezug auf das optische Element zu bestimmen;
Erhalten eines ersten virtuellen Bildes und eines zweiten virtuellen Bildes, die dem ersten Auge bzw. dem zweiten Auge des mindestens einen Benutzers zu präsentieren sind, basierend auf der relativen Position des ersten Auges und des zweiten Auges des mindestens einen Benutzers in Bezug auf das optische Element;
Erzeugen mindestens eines Bildes zur Verwendung an der Anzeigeeinheit, basierend auf dem ersten virtuellen Bild, dem zweiten virtuellen Bild, der relativen Position des ersten Auges und des zweiten Auges des mindestens einen Benutzers in Bezug auf das optische Element und einer relativen Position des optischen Elements in Bezug auf den ersten Anzeigebereich und den zweiten Anzeigebereich; und
Anzeigen des mindestens einen Bildes über die Anzeigeeinheit,
wobei das optische Element eingesetzt wird, um Licht (116), das von lichtemittierenden Zellen auf dem zweiten Anzeigebereich ausgeht, so umzulenken, dass es sich in Richtung des ersten Auges und des zweiten Auges des mindestens einen Benutzers biegt, während zugelassen wird, dass Licht (118), das von lichtemittierenden Zellen auf dem ersten Anzeigebereich ausgeht, auf das erste Auge und das zweite Auge des mindestens einen Benutzers einfällt, ohne sich zu biegen.

2. System (100, 400) nach Anspruch 1, wobei das optische Element (110, 208, 408) hergestellt ist aus dem doppelbrechenden Material, wobei der mindestens eine Prozessor (112) konfiguriert ist, um eine Polarisationsausrichtung von Licht (116), das von einer gegebenen Gruppe von lichtempfindlichen Zellen des zweiten Anzeigebereichs (108, 206, 304) ausgeht, basierend auf einer Doppelbrechung des doppelbrechenden Materials, einem Einfallswinkel des Lichts, das auf einen gegebenen Teil des optischen Elements einfällt, und einem Brechungswinkel des Lichts, nachdem es durch den gegebenen Teil des optischen Elements in Richtung eines gegebenen Auges des mindestens einen Benutzers umgelenkt wurde, zu steuern.

3. System (100, 400) nach einem der vorstehenden Ansprüche, wobei das optische Element (110, 208, 408) aktiv steuerbar ist.

4. System (100, 400) nach Anspruch 3, wobei, wenn das optische Element (110, 208, 408) aus dem doppelbrechenden Material hergestellt ist, das doppelbrechende Material ein Flüssigkristallmaterial umfasst, wobei der mindestens eine Prozessor (112) konfiguriert ist, um das optische Element durch Steuern eines Brechungsindex des Flüssigkristallmaterials in einem gegebenen Teil des optischen Elements zu steuern, basierend auf einem Einfallswinkel von Licht (116), das von einer gegebenen Gruppe von lichtempfindlichen Zellen des zweiten Anzeigebereichs (108, 206, 304) ausgeht und auf den gegebenen Teil des optischen Elements einfällt, und einem Brechungswinkel des Lichts, nachdem es durch den gegebenen Teil des optischen Elements in Richtung eines gegebenen Auges des mindestens einen Benutzers umgelenkt wurde.

5. System (100, 400) nach Anspruch 3, wobei, wenn das optische Element (110, 208, 408) aus dem Metamaterial hergestellt ist, das optische Element halbtransparent ist und Mikrospiegel (M1, M2) umfasst, wobei der mindestens eine Prozessor (112) konfiguriert ist, um das optische Element durch Steuern einer Ausrichtung eines gegebenen Mikrospiegels (M1, M2) zu steuern, basierend auf einem Einfallswinkel von Licht (116), das von einer gegebenen Gruppe von lichtempfindlichen Zellen des zweiten Anzeigebereichs (108, 206, 304) ausgeht und auf das optische Element einfällt, und einem Brechungswinkel des Lichts, nachdem es durch den gegebenen Spiegel in Richtung eines gegebenen Auges des mindestens einen Benutzers umgelenkt wurde.

6. System (100, 400) nach einem der Ansprüche 3 bis 5, wobei der mindestens eine Prozessor (112) konfiguriert ist, um das optische Element (110, 208, 408) zu steuern durch:
Steuern eines ersten Teils des optischen Elements, auf den erstes Licht einfällt, das von einer ersten lichtemittierenden Zelle (P1) des zweiten Anzeigebereichs (108, 206, 304) ausgeht, um das erste Licht in Richtung des ersten Auges (114a, 210a, 422a) des mindestens einen Benutzers umzulenken, basierend auf der relativen Position des ersten Auges in Bezug auf das optische Element;
Steuern eines zweiten Teils des optischen Elements, auf den zweites Licht, das von einer zweiten lichtemittierenden Zelle (P2) des zweiten Anzeigebereichs ausgeht, einfällt, um das zweite Licht in Richtung des zweiten Auges (114b, 210b, 422b) des mindestens einen Benutzers umzulenken, basierend auf der relativen Position des zweiten Auges in Bezug auf das optische Element; und
Steuern des ersten Teils und des zweiten Teils des optischen Elements, um zu ermöglichen, dass drittes Licht, das von einer dritten lichtemittierenden Zelle (P0) des ersten Anzeigebereichs (106, 204, 302) ausgeht, ohne Ablenkung auf das erste Auge bzw. das zweite Auge gerichtet wird.

7. System (100, 400) nach einem der Ansprüche 1 bis 2, wobei ein erster Teil des optischen Elements (110, 208, 408) eingesetzt wird, um erstes Licht, das von einer ersten lichtemittierenden Zelle (P1) des zweiten Anzeigebereichs (108, 206, 304) ausgeht, in Richtung des ersten Auges (114a, 210a, 422a) des mindestens einen Benutzers umzulenken, und ein zweiter Teil des optischen Elements eingesetzt wird, um zweites Licht, das von einer zweiten lichtemittierenden Zelle (P2) des zweiten Anzeigebereichs ausgeht, in Richtung des zweiten Auges (114b, 210b, 422b) des mindestens einen Benutzers umzulenken,
wobei der erste Teil und der zweite Teil des optischen Elements eingesetzt werden, um zu ermöglichen, dass drittes Licht, das von einer dritten lichtemittierenden Zelle (P0) des ersten Anzeigebereichs (106, 204, 302) ausgeht, ohne Ablenkung auf das erste Auge bzw. das zweite Auge gerichtet wird.

8. System (100, 400) nach Anspruch 6 oder 7, wobei ein erstes Pixel, ein zweites Pixel und ein drittes Pixel des mindestens einen Bildes der ersten lichtemittierenden Zelle (P1), der zweiten lichtemittierenden Zelle (P2) und der dritten lichtemittierenden Zelle (P0) entsprechen, wobei beim Erzeugen des mindestens einen Bildes der mindestens eine Prozessor (112) konfiguriert ist, um einen ersten Intensitätswert, einen zweiten Intensitätswert und einen dritten Intensitätswert für das erste Pixel, das zweite Pixel bzw. das dritte Pixel des mindestens einen Bildes zu erzeugen, basierend auf einem ersten Ausgabeintensitätswert und einem zweiten Ausgabeintensitätswert eines gegebenen 3D-Punktes in dem ersten virtuellen Bild bzw. dem zweiten virtuellen Bild.

9. System (100, 400) nach Anspruch 8, ferner umfassend einen optischen Kombinierer (410), der auf dem optischen Pfad der Anzeigeeinheit (104, 202, 300, 406) und auf einem optischen Pfad eines realen Lichtfeldes (416) einer realen Umgebung angeordnet ist, wobei der optische Kombinierer eingesetzt wird, um das von dem optischen Element (110, 208, 408) empfangene Licht (418) in Richtung des ersten Auges (114a, 210a, 422a) und des zweiten Auges (114b, 210b, 422b) des mindestens einen Benutzers zu reflektieren, während das Licht optisch mit dem realen Lichtfeld kombiniert wird,
wobei der mindestens eine Prozessor (112) konfiguriert ist zum:
Bestimmen einer Intensität eines Teils des realen Lichtfelds, das durch einen Teil des optischen Kombinierers hindurch verläuft, von dem aus das erste Licht, das von der ersten lichtemittierenden Zelle (P1) ausgeht, und das dritte Licht, das von der dritten lichtemittierenden Zelle (P0) ausgeht, in Richtung des ersten Auges verlaufen;
Erfassen, wenn die Intensität des Teils des realen Lichtfelds, der durch den Teil des optischen Kombinierers hindurch verläuft, geringer ist als der erste Ausgabeintensitätswert des gegebenen 3D-Punkts; und
wenn erfasst wird, dass die Intensität des Teils des realen Lichtfelds geringer ist als der erste Ausgabeintensitätswert des gegebenen 3D-Punkts, Anpassen des ersten Intensitätswerts des ersten Pixels und des dritten Intensitätswerts des dritten Pixels basierend auf einer Differenz zwischen dem ersten Ausgabeintensitätswert des gegebenen 3D-Punkts und der Intensität des Teils des realen Lichtfelds.

10. System (100, 400) nach einem der Ansprüche 6, 8 oder 9, wobei der mindestens eine Prozessor (112) konfiguriert ist, um das optische Element (110, 208, 408) zu steuern durch:
Steuern eines weiteren ersten Teils des optischen Elements, auf den erstes Licht, das von der ersten lichtemittierenden Zelle (P1) des zweiten Anzeigebereichs (108, 206, 304) ausgeht, einfällt, um das erste Licht in Richtung des zweiten Auges (114b, 210b, 422b) des mindestens einen Benutzers umzulenken, basierend auf der relativen Position des zweiten Auges in Bezug auf das optische Element;
Steuern eines weiteren zweiten Teils des optischen Elements, auf den zweites Licht, das von der zweiten lichtemittierenden Zelle (P2) des zweiten Anzeigebereichs ausgeht, einfällt, um das zweite Licht in Richtung des ersten Auges (114a, 210a, 422a) des mindestens einen Benutzers umzulenken, basierend auf der relativen Position des ersten Auges in Bezug auf das optische Element; und
Steuern des weiteren ersten Teils und des weiteren zweiten Teils des optischen Elements, um zu ermöglichen, dass viertes Licht, das von einer vierten lichtemittierenden Zelle des ersten Anzeigebereichs (106, 204, 302) ausgeht, ohne Ablenkung in Richtung des ersten Auges bzw. des zweiten Auges gerichtet wird.

11. System (100, 400) nach einem der Ansprüche 7, 8 oder 9, wobei ein weiterer erster Teil des optischen Elements (110, 208, 408) eingesetzt wird, um das erste Licht, das von der ersten lichtemittierenden Zelle (P1) des zweiten Anzeigebereichs (108, 206, 304) ausgeht, in Richtung des zweiten Auges (114b, 210b, 422b) des mindestens einen Benutzers umzulenken, und ein weiterer zweiter Teil des optischen Elements eingesetzt wird, um das zweite Licht, das von der zweiten lichtemittierenden Zelle (P2) des zweiten Anzeigebereichs ausgeht, in Richtung des ersten Auges (114a, 210a, 422a) des mindestens einen Benutzers umzulenken,
wobei der weitere erste Teil und der weitere zweite Teil des optischen Elements eingesetzt werden, um zu ermöglichen, dass viertes Licht, das von einer vierten lichtemittierenden Zelle des ersten Anzeigebereichs (106, 204, 302) ausgeht, ohne Ablenkung auf das erste Auge bzw. das zweite Auge gerichtet wird.

12. System (100, 400) nach Anspruch 10 oder 11, wobei ein erstes Pixel, ein zweites Pixel, ein drittes Pixel und ein viertes Pixel des mindestens einen Bildes der ersten lichtemittierenden Zelle (P1), der zweiten lichtemittierenden Zelle (P2), der dritten lichtemittierenden Zelle (P0) und der vierten lichtemittierenden Zelle entsprechen, wobei beim Erzeugen des mindestens einen Bildes der mindestens eine Prozessor (112) konfiguriert ist, um einen ersten Intensitätswert, einen zweiten Intensitätswert, einen dritten Intensitätswert und einen vierten Intensitätswert für das erste Pixel, das zweite Pixel, das dritte Pixel bzw. das vierte Pixel des mindestens einen Bildes zu erzeugen, basierend auf einem ersten Ausgabeintensitätswert und einem zweiten Ausgabeintensitätswert eines gegebenen 3D-Punktes in dem ersten virtuellen Bild bzw. dem zweiten virtuellen Bild, und einem ersten Ausgabeintensitätswert und einem zweiten Ausgabeintensitätswert eines anderen gegebenen 3D-Punktes in dem ersten virtuellen Bild bzw. dem zweiten virtuellen Bild, wobei der gegebene 3D-Punkt dem ersten Teil und dem zweiten Teil des optischen Elements (110, 208, 408) entspricht, während der andere gegebene 3D-Punkt dem anderen ersten Teil und dem anderen zweiten Teil des optischen Elements entspricht.

13. System (100, 400) nach Anspruch 12, ferner umfassend Blickverfolgungsmittel (102, 404), wobei der mindestens eine Prozessor (112) konfiguriert ist zum:
Verwenden des Blickverfolgungsmittels, um die Blickrichtungen der Augen des mindestens einen Benutzers zu bestimmen;
Erfassen, wenn der erste Teil und der zweite Teil des optischen Elements (110, 208, 408) den Blickrichtungen der Augen des mindestens einen Benutzers entsprechen, aber der weitere erste Teil und der weitere zweite Teil des optischen Elements nicht den Blickrichtungen der Augen des mindestens einen Benutzers entsprechen; und
wenn erfasst wird, dass der erste Teil und der zweite Teil des optischen Elements den Blickrichtungen entsprechen, aber der weitere erste Teil und der weitere zweite Teil des optischen Elements nicht den Blickrichtungen entsprechen, Priorisieren der Minimierung eines visuellen Fehlers in Ausgabeintensitätswerten, die für den gegebenen 3D-Punkt erzeugt werden, gegenüber Ausgabeintensitätswerten, die für den weiteren gegebenen 3D-Punkt erzeugt werden.

14. System (100, 400) nach einem der vorstehenden Ansprüche, ferner umfassend einen optischen Kombinierer (410), der auf dem optischen Pfad der Anzeigeeinheit (104, 202, 300, 406) und auf einem optischen Pfad eines realen Lichtfeldes (416) einer realen Umgebung angeordnet ist, wobei der optische Kombinierer eingesetzt wird, um das von dem optischen Element (110, 208, 408) empfangene Licht (418) in Richtung des ersten Auges (114a, 210a, 422a) und des zweiten Auges (114b, 210b, 422b) des mindestens einen Benutzers zu reflektieren, während das Licht optisch mit dem realen Lichtfeld kombiniert wird,
wobei der mindestens eine Prozessor (112) konfiguriert ist zum:
Bestimmen von Intensitäten verschiedener Teile des realen Lichtfelds, das durch den optischen Kombinierer in Richtung eines gegebenen Auges verläuft;
Erfassen, wenn eine Intensität eines gegebenen Teils des realen Lichtfelds, das durch einen gegebenen Teil des optischen Kombinierers in Richtung des gegebenen Auges verläuft, größer als eine vorgegebene Schwellenintensität ist; und
wenn erfasst wird, dass die Intensität des gegebenen Teils des realen Lichtfeldes, das durch den gegebenen Teil des optischen Kombinierers in Richtung des gegebenen Auges verläuft, größer als die vorgegebene Schwellenintensität ist, Abdunkeln von Pixeln des ersten Anzeigebereichs (106, 204, 302) und des zweiten Anzeigebereichs (108, 206, 304), auf deren optischem Pfad der gegebene Teil des optischen Kombinierers liegt.

15. Verfahren, umfassend:
Verwenden von Verfolgungsmitteln (102, 404), um eine relative Position eines ersten Auges (114a, 210a, 422a) und eines zweiten Auges (114b, 210b, 422b) mindestens eines Benutzers in Bezug auf ein optisches Element (110, 208, 408) zu bestimmen, wobei das optische Element auf einem optischen Pfad einer Anzeigeeinheit (104, 202, 300, 406) angeordnet ist, die einen ersten Anzeigebereich (106, 204, 302) und einen zweiten Anzeigebereich (108, 206, 304) umfasst, wobei das optische Element hergestellt ist aus einem von: (i) einem doppelbrechenden Material, (ii) einem Metamaterial;
Erhalten eines ersten virtuellen Bildes und eines zweiten virtuellen Bildes, die dem ersten Auge bzw. dem zweiten Auge des mindestens einen Benutzers zu präsentieren sind, basierend auf der relativen Position des ersten Auges und des zweiten Auges des mindestens einen Benutzers in Bezug auf das optische Element;
Erzeugen mindestens eines Bildes zur Verwendung an der Anzeigeeinheit, basierend auf dem ersten virtuellen Bild, dem zweiten virtuellen Bild, der relativen Position des ersten Auges und des zweiten Auges des mindestens einen Benutzers in Bezug auf das optische Element und einer relativen Position des optischen Elements in Bezug auf den ersten Anzeigebereich und den zweiten Anzeigebereich; und
Anzeigen des mindestens einen Bildes über die Anzeigeeinheit,
wobei das optische Element eingesetzt wird, um Licht (116), das von lichtemittierenden Zellen auf dem zweiten Anzeigebereich ausgeht, so umzulenken, dass es sich in Richtung des ersten Auges und des zweiten Auges des mindestens einen Benutzers biegt, während zugelassen wird, dass Licht (118), das von lichtemittierenden Zellen auf dem ersten Anzeigebereich ausgeht, auf das erste Auge und das zweite Auge des mindestens einen Benutzers einfällt, ohne sich zu biegen.

16. Verfahren nach Anspruch 15, wobei, wenn das optische Element (110, 208, 408) aus dem doppelbrechenden Material hergestellt ist, das doppelbrechende Material ein Flüssigkristallmaterial umfasst, wobei das Verfahren ferner das Steuern des optischen Elements durch Steuern eines Brechungsindex des Flüssigkristallmaterials in einem gegebenen Teil des optischen Elements umfasst, basierend auf einem Einfallswinkel von Licht (116), das von einer gegebenen Gruppe von lichtempfindlichen Zellen des zweiten Anzeigebereichs (108, 206, 304) ausgeht und auf den gegebenen Teil des optischen Elements einfällt, und einem Brechungswinkel des Lichts, nachdem es durch den gegebenen Teil des optischen Elements in Richtung eines gegebenen Auges des mindestens einen Benutzers umgelenkt wurde.

17. Verfahren nach Anspruch 15, wobei, wenn das optische Element (110, 208, 408) aus dem Metamaterial hergestellt ist, das optische Element halbtransparent ist und Mikrospiegel (M1, M2) umfasst, wobei das Verfahren ferner das Steuern des optischen Elements durch Steuern einer Ausrichtung eines gegebenen Mikrospiegels (M1, M2) umfasst, basierend auf einem Einfallswinkel von Licht (116), das von einer gegebenen Gruppe von lichtempfindlichen Zellen des zweiten Anzeigebereichs (108, 206, 304) ausgeht und auf das optische Element einfällt, und einem Brechungswinkel des Lichts, nachdem es durch den gegebenen Spiegel in Richtung eines gegebenen Auges des mindestens einen Benutzers umgelenkt wurde.

18. Verfahren nach Anspruch 16 oder 17, ferner umfassend Steuern des optischen Elements (110, 208, 408) durch:
Steuern eines ersten Teils des optischen Elements, auf den erstes Licht, das von einer ersten lichtemittierenden Zelle (P1) des zweiten Anzeigebereichs (108, 206, 304) ausgeht, einfällt, um das erste Licht in Richtung des ersten Auges (114a, 210a, 422a) des mindestens einen Benutzers umzulenken, basierend auf der relativen Position des ersten Auges in Bezug auf das optische Element;
Steuern eines zweiten Teils des optischen Elements, auf den zweites Licht, das von einer zweiten lichtemittierenden Zelle (P2) des zweiten Anzeigebereichs ausgeht, einfällt, um das zweite Licht in Richtung des zweiten Auges (114b, 210b, 422b) des mindestens einen Benutzers umzulenken, basierend auf der relativen Position des zweiten Auges in Bezug auf das optische Element; und
Steuern des ersten Teils und des zweiten Teils des optischen Elements, um zu ermöglichen, dass drittes Licht, das von einer dritten lichtemittierenden Zelle (P0) des ersten Anzeigebereichs (106, 204, 302) ausgeht, ohne Ablenkung auf das erste Auge bzw. das zweite Auge gerichtet wird.

19. Verfahren nach Anspruch 18, wobei ein erstes Pixel, ein zweites Pixel und ein drittes Pixel des mindestens einen Bildes der ersten lichtemittierenden Zelle (P1), der zweiten lichtemittierenden Zelle (P2) und der dritten lichtemittierenden Zelle (P0) entsprechen, wobei der Schritt des Erzeugens des mindestens einen Bildes das Erzeugen eines ersten Intensitätswerts, eines zweiten Intensitätswerts und eines dritten Intensitätswerts für das erste Pixel, das zweite Pixel bzw. das dritte Pixel des mindestens einen Bildes basierend auf einem ersten Ausgabeintensitätswert und einem zweiten Ausgabeintensitätswert eines gegebenen 3D-Punkts in dem ersten virtuellen Bild bzw. dem zweiten virtuellen Bild umfasst.

20. Verfahren nach Anspruch 19, wobei ein optischer Kombinierer (410) auf dem optischen Pfad der Anzeigeeinheit (104, 202, 300, 406) und auf einem optischen Pfad eines realen Lichtfeldes (416) einer realen Umgebung angeordnet ist, wobei der optische Kombinierer eingesetzt wird, um das von dem optischen Element (110, 208, 408) empfangene Licht (418) in Richtung des ersten Auges (114a, 210a, 422a) und des zweiten Auges (114b, 210b, 422b) des mindestens einen Benutzers zu reflektieren, während das Licht optisch mit dem realen Lichtfeld kombiniert wird,
wobei das Verfahren ferner umfasst:
Bestimmen einer Intensität eines Teils des realen Lichtfelds, das durch einen Teil des optischen Kombinierers hindurch verläuft, von dem aus das erste Licht, das von der ersten lichtemittierenden Zelle (P1) ausgeht, und das dritte Licht, das von der dritten lichtemittierenden Zelle (P0) ausgeht, in Richtung des ersten Auges verlaufen;
Erfassen, wenn die Intensität des Teils des realen Lichtfelds, der durch den Teil des optischen Kombinierers hindurch verläuft, geringer ist als der erste Ausgabeintensitätswert des gegebenen 3D-Punkts; und
wenn erfasst wird, dass die Intensität des Teils des realen Lichtfelds geringer ist als der erste Ausgabeintensitätswert des gegebenen 3D-Punkts, Anpassen des ersten Intensitätswerts des ersten Pixels und des dritten Intensitätswerts des dritten Pixels basierend auf einer Differenz zwischen dem ersten Ausgabeintensitätswert des gegebenen 3D-Punkts und der Intensität des Teils des realen Lichtfelds.

## Revendications

1. Système (100, 400) comprenant :
un moyen de suivi (102, 404) ;
une unité d'affichage (104, 202, 300, 406) comprenant une première région d'affichage (106, 204, 302) et une seconde région d'affichage (108, 206, 304) ;
un élément optique (110, 208, 408) agencé sur un trajet optique de l'unité d'affichage, l'élément optique étant fabriqué dans l'un quelconque parmi : (i) un matériau biréfringent, (ii) un métamatériau ; et
au moins un processeur (112) configuré pour :
utiliser le moyen de suivi pour déterminer une localisation relative d'un premier œil (114a, 210a, 422a) et d'un second œil (114b, 210b, 422b) d'au moins un utilisateur par rapport à l'élément optique ;
obtenir une première image virtuelle et une seconde image virtuelle à présenter au premier œil et au second œil de l'au moins un utilisateur, respectivement, en fonction de la localisation relative du premier œil et du second œil de l'au moins un utilisateur par rapport à l'élément optique ;
générer au moins une image à employer au niveau de l'unité d'affichage, en fonction de la première image virtuelle, de la seconde image virtuelle, de la localisation relative du premier œil et du second œil de l'au moins un utilisateur par rapport à l'élément optique, et d'une localisation relative de l'élément optique par rapport à la première région d'affichage et à la seconde région d'affichage ; et
afficher l'au moins une image par l'intermédiaire de l'unité d'affichage,
dans lequel l'élément optique est employé pour rediriger de la lumière (116) émanant de cellules photo-émettrices sur la seconde région d'affichage pour la dévier en direction du premier œil et du second œil de l'au moins un utilisateur, tout en permettant à de la lumière (118) émanant des cellules photo-émettrices sur la première région d'affichage d'être incidente sur le premier œil et le second œil de l'au moins un utilisateur sans déviation.

2. Système (100, 400) selon la revendication 1, dans lequel l'élément optique (110, 208, 408) est fabriqué en matériau biréfringent, dans lequel l'au moins un processeur (112) est configuré pour commander une orientation de polarisation de la lumière (116) émanant d'un groupe donné de cellules photosensibles de la seconde région d'affichage (108, 206, 304), en fonction d'une biréfringence du matériau biréfringent, d'un angle d'incidence de ladite lumière étant incidente sur une partie donnée de l'élément optique et d'un angle de réfraction de la lumière après avoir été redirigée par la partie donnée de l'élément optique en direction d'un œil donné de l'au moins un utilisateur.

3. Système (100, 400) selon l'une quelconque des revendications précédentes, dans lequel l'élément optique (110, 208, 408) est commandable activement.

4. Système (100, 400) selon la revendication 3, dans lequel lorsque l'élément optique (110, 208, 408) est fabriqué en matériau biréfringent, le matériau biréfringent comprend un matériau à cristaux liquides, dans lequel l'au moins un processeur (112) est configuré pour commander l'élément optique en commandant un indice de réfraction du matériau à cristaux liquides dans une partie donnée de l'élément optique, en fonction d'un angle d'incidence de lumière (116) émanant d'un groupe donné de cellules photosensibles de la seconde région d'affichage (108, 206, 304) étant incidente sur la partie donnée de l'élément optique et d'un angle de réfraction de la lumière après avoir été redirigée par la partie donnée de l'élément optique en direction d'un œil donné de l'au moins un utilisateur.

5. Système (100, 400) selon la revendication 3, dans lequel lorsque l'élément optique (110, 208, 408) est fabriqué en métamatériau, l'élément optique est semi-transparent et comprend des micromiroirs (M1, M2), dans lequel l'au moins un processeur (112) est configuré pour commander l'élément optique en commandant une orientation d'un micromiroir (M1, M2) donné, en fonction d'un angle d'incidence de lumière (116) émanant d'un groupe donné de cellules photosensibles de la seconde région d'affichage (108, 206, 304) étant incidente sur l'élément optique et d'un angle de réfraction de la lumière après avoir été redirigée par le miroir donné en direction d'un œil donné de l'au moins un utilisateur.

6. Système (100, 400) selon l'une quelconque des revendications 3 à 5, dans lequel l'au moins un processeur (112) est configuré pour commander l'élément optique (110, 208, 408) par :
la commande d'une première partie de l'élément optique sur laquelle de la première lumière émanant d'une première cellule photo-émettrice (P1) de la seconde région d'affichage (108, 206, 304) est incidente, pour rediriger la première lumière en direction du premier œil (114a, 210a, 422a) de l'au moins un utilisateur, en fonction de la localisation relative du premier œil par rapport à l'élément optique ;
la commande d'une seconde partie de l'élément optique sur laquelle de la deuxième lumière émanant d'une deuxième cellule photo-émettrice (P2) de la seconde région d'affichage est incidente, pour rediriger la deuxième lumière en direction du second œil (114b, 210b, 422b) de l'au moins un utilisateur, en fonction de la localisation relative du second œil par rapport à l'élément optique ; et
la commande de la première partie et de la seconde partie de l'élément optique pour permettre à de la troisième lumière émanant d'une troisième cellule photo-émettrice (P0) de la première région d'affichage (106, 204, 302) d'être dirigée en direction du premier œil et du second œil, respectivement, sans déviation.

7. Système (100, 400) selon l'une quelconque des revendications 1 à 2, dans lequel une première partie de l'élément optique (110, 208, 408) est employée pour rediriger de la première lumière émanant d'une première cellule photo-émettrice (P1) de la seconde région d'affichage (108, 206, 304) en direction du premier œil (114a, 210a, 422a) de l'au moins un utilisateur, et une seconde partie de l'élément optique est employée pour rediriger de la deuxième lumière émanant d'une deuxième cellule photo-émettrice (P2) de la seconde région d'affichage en direction du second œil (114b, 210b, 422b) de l'au moins un utilisateur,
dans lequel la première partie et la seconde partie de l'élément optique sont employées pour permettre à de la troisième lumière émanant de la troisième cellule photo-émettrice (P0) de la première région d'affichage (106, 204, 302) d'être dirigée en direction du premier œil et du second œil, respectivement, sans déviation.

8. Système (100, 400) selon la revendication 6 ou 7, dans lequel un premier pixel, un deuxième pixel et un troisième pixel de l'au moins une image correspondent à la première cellule photo-émettrice (P1), à la deuxième cellule photo-émettrice (P2) et à la troisième cellule photo-émettrice (P0), dans lequel lors de la génération de l'au moins une image, l'au moins un processeur (112) est configuré pour générer une première valeur d'intensité, une deuxième valeur d'intensité et une troisième valeur d'intensité pour le premier pixel, le deuxième pixel et le troisième pixel de l'au moins une image, respectivement, en fonction d'une première valeur d'intensité de sortie et d'une seconde valeur d'intensité de sortie d'un point 3D donné dans la première image virtuelle et la seconde image virtuelle, respectivement.

9. Système (100, 400) selon la revendication 8, comprenant en outre un combinateur optique (410) agencé sur le trajet optique de l'unité d'affichage (104, 202, 300, 406) et sur un trajet optique d'un champ lumineux de monde réel (416) d'un environnement de monde réel, dans lequel le combinateur optique est employé pour réfléchir la lumière (418) reçue de l'élément optique (110, 208, 408) en direction du premier œil (114a, 210a, 422a) et du second œil (114b, 210b, 422b) de l'au moins un utilisateur, tout en combinant optiquement ladite lumière avec le champ lumineux de monde réel,
dans lequel l'au moins un processeur (112) est configuré pour :
déterminer une intensité d'une partie du champ lumineux de monde réel passant à travers une partie du combinateur optique à partir duquel la première lumière émanant de la première cellule photo-émettrice (P1) et la troisième lumière émanant de la troisième cellule photo-émettrice (P0) passent en direction du premier œil ;
détecter lorsque l'intensité de la partie du champ lumineux de monde réel passant à travers la partie du combinateur optique est inférieure à la première valeur d'intensité de sortie du point 3D donné ; et
lorsqu'il est détecté que l'intensité de ladite partie du champ lumineux de monde réel est inférieure à la première valeur d'intensité de sortie du point 3D donné, ajuster la première valeur d'intensité du premier pixel et la troisième valeur d'intensité du troisième pixel, en fonction d'une différence entre la première valeur d'intensité de sortie du point 3D donné et l'intensité de ladite partie du champ lumineux de monde réel.

10. Système (100, 400) selon l'une quelconque des revendications 6, 8 ou 9, dans lequel l'au moins un processeur (112) est configuré pour commander l'élément optique (110, 208, 408) par :
la commande d'une autre première partie de l'élément optique sur laquelle de la première lumière émanant de la première cellule photo-émettrice (P1) de la seconde région d'affichage (108, 206, 304) est incidente, pour rediriger la première lumière en direction du second œil (114b, 210b, 422b) de l'au moins un utilisateur, en fonction de la localisation relative du second œil par rapport à l'élément optique ;
la commande d'une autre seconde partie de l'élément optique sur laquelle de la deuxième lumière émanant de la deuxième cellule photo-émettrice (P2) de la seconde région d'affichage est incidente, pour rediriger la deuxième lumière en direction du premier œil (114a, 210a, 422a) de l'au moins un utilisateur, en fonction de la localisation relative du premier œil par rapport à l'élément optique ; et
la commande de l'autre première partie précitée et de l'autre seconde partie précitée de l'élément optique pour permettre à de la quatrième lumière émanant d'une quatrième cellule photo-émettrice de la première région d'affichage (106, 204, 302) d'être dirigée en direction du premier œil et du second œil, respectivement, sans déviation.

11. Système (100, 400) selon l'une quelconque des revendications 7, 8 ou 9, dans lequel une autre première partie de l'élément optique (110, 208, 408) est employée pour rediriger la première lumière émanant de la première cellule photo-émettrice (P1) de la seconde région d'affichage (108, 206, 304) en direction du second œil (114b, 210b, 422b) de l'au moins un utilisateur, et une autre seconde partie de l'élément optique est employée pour rediriger la deuxième lumière émanant de la deuxième cellule photo-émettrice (P2) de la seconde région d'affichage en direction du premier œil (114a, 210a, 422a) de l'au moins un utilisateur,
dans lequel l'autre première partie précitée et l'autre seconde partie précitée de l'élément optique sont employées pour permettre à de la quatrième lumière émanant d'une quatrième cellule photo-émettrice de la première région d'affichage (106, 204, 302) d'être dirigée en direction du premier œil et du second œil, respectivement, sans déviation.

12. Système (100, 400) selon la revendication 10 ou 11, dans lequel un premier pixel, un deuxième pixel, un troisième pixel et un quatrième pixel de l'au moins une image correspondent à la première cellule photo-émettrice (P1), à la deuxième cellule photo-émettrice (P2), à la troisième cellule photo-émettrice (P0) et à la quatrième cellule photo-émettrice, dans lequel lors de la génération de l'au moins une image, l'au moins un processeur (112) est configuré pour générer une première valeur d'intensité, une deuxième valeur d'intensité, une troisième valeur d'intensité et une quatrième valeur d'intensité pour le premier pixel, le deuxième pixel, le troisième pixel et le quatrième pixel de l'au moins une image, respectivement, en fonction d'une première valeur d'intensité de sortie et d'une seconde valeur d'intensité de sortie d'un point 3D donné dans la première image virtuelle et la seconde image virtuelle, respectivement, et d'une première valeur d'intensité de sortie et d'une seconde valeur d'intensité de sortie d'un autre point 3D donné dans la première image virtuelle et la seconde image virtuelle, respectivement, dans lequel le point 3D donné correspond à la première partie et à la seconde partie de l'élément optique (110, 208, 408), alors que l'autre point 3D donné précité correspond à l'autre première partie précitée et à l'autre seconde partie précitée de l'élément optique.

13. Système (100, 400) selon la revendication 12, comprenant en outre un moyen de suivi de regard (102, 404), dans lequel l'au moins un processeur (112) est configuré pour :
utiliser le moyen de suivi de regard pour déterminer des directions de regard des yeux de l'au moins un utilisateur ;
détecter lorsque la première partie et la seconde partie de l'élément optique (110, 208, 408) correspondent aux directions de regard des yeux de l'au moins un utilisateur, mais que l'autre première partie précitée et l'autre seconde partie précitée de l'élément optique ne correspondent pas aux directions de regard des yeux de l'au moins un utilisateur ; et
lorsqu'il est détecté que la première partie et la seconde partie de l'élément optique correspondent aux directions de regard, mais que l'autre première partie précitée et l'autre seconde partie précitée de l'élément optique ne correspondent pas aux directions de regard, prioriser la réduction au minimum d'une erreur visuelle dans les valeurs d'intensité de sortie produites pour le point 3D donné par rapport aux valeurs d'intensité de sortie produites pour l'autre point 3D donné précité.

14. Système (100, 400) selon l'une quelconque des revendications précédentes, comprenant en outre un combinateur optique (410) agencé sur le trajet optique de l'unité d'affichage (104, 202, 300, 406) et sur un trajet optique d'un champ lumineux de monde réel (416) d'un environnement de monde réel, dans lequel le combinateur optique est employé pour réfléchir la lumière (418) reçue de l'élément optique (110, 208, 408) en direction du premier œil (114a, 210a, 422a) et du second œil (114b, 210b, 422b) de l'au moins un utilisateur, tout en combinant optiquement ladite lumière avec le champ lumineux de monde réel,
dans lequel l'au moins un processeur (112) est configuré pour :
déterminer des intensités de parties différentes du champ lumineux de monde réel passant à travers le combinateur optique en direction d'un œil donné ;
détecter lorsqu'une intensité d'une partie donnée du champ lumineux de monde réel passant à travers une partie donnée du combinateur optique en direction de l'œil donné est supérieure à une intensité seuil prédéfinie ; et
lorsqu'il est détecté que l'intensité de la partie donnée du champ lumineux de monde réel passant à travers la partie donnée du combinateur optique en direction de l'œil donné est supérieure à l'intensité seuil prédéfinie, estomper des pixels de la première région d'affichage (106, 204, 302) et de la seconde région d'affichage (108, 206, 304) sur le trajet optique desquels la partie donnée du combinateur optique se trouve.

15. Procédé comprenant :
l'utilisation d'un moyen de suivi (102, 404) pour déterminer une localisation relative d'un premier œil (114a, 210a, 422a) et d'un second œil (114b, 210b, 422b) d'au moins un utilisateur par rapport à un élément optique (110, 208, 408), l'élément optique étant agencé sur un trajet optique d'une unité d'affichage (104, 202, 300, 406) comprenant une première région d'affichage (106, 204, 302) et une seconde région d'affichage (108, 206, 304), l'élément optique étant fabriqué dans l'un quelconque parmi : (i) un matériau biréfringent, (ii) un métamatériau ;
l'obtention d'une première image virtuelle et d'une seconde image virtuelle à présenter au premier œil et au second œil de l'au moins un utilisateur, respectivement, en fonction de la localisation relative du premier œil et du second œil de l'au moins un utilisateur par rapport à l'élément optique ;
la génération d'au moins une image à employer au niveau de l'unité d'affichage, en fonction de la première image virtuelle, de la seconde image virtuelle, de la localisation relative du premier œil et du second œil de l'au moins un utilisateur par rapport à l'élément optique, et d'une localisation relative de l'élément optique par rapport à la première région d'affichage et à la seconde région d'affichage ; et
l'affichage de l'au moins une image par l'intermédiaire de l'unité d'affichage,
dans lequel l'élément optique est employé pour rediriger de la lumière (116) émanant de cellules photo-émettrices sur la seconde région d'affichage pour la dévier en direction du premier œil et du second œil de l'au moins un utilisateur, tout en permettant à de la lumière (118) émanant des cellules photo-émettrices sur la première région d'affichage d'être incidente sur le premier œil et le second œil de l'au moins un utilisateur sans déviation.

16. Procédé selon la revendication 15, dans lequel lorsque l'élément optique (110, 208, 408) est fabriqué en matériau biréfringent, le matériau biréfringent comprend un matériau à cristaux liquides, dans lequel le procédé comprend en outre la commande de l'élément optique en commandant un indice de réfraction du matériau à cristaux liquides dans une partie donnée de l'élément optique, en fonction d'un angle d'incidence de lumière (116) émanant d'un groupe donné de cellules photosensibles de la seconde région d'affichage (108, 206, 304) étant incidente sur la partie donnée de l'élément optique et d'un angle de réfraction de la lumière après avoir été redirigée par la partie donnée de l'élément optique en direction d'un œil donné de l'au moins un utilisateur.

17. Procédé selon la revendication 15, dans lequel lorsque l'élément optique (110, 208, 408) est fabriqué en métamatériau, l'élément optique est semi-transparent et comprend des micromiroirs (M1, M2), dans lequel le procédé comprend en outre la commande de l'élément optique en commandant une orientation d'un micromiroir (M1, M2) donné, en fonction d'un angle d'incidence de lumière (116) émanant d'un groupe donné de cellules photosensibles de la seconde région d'affichage (108, 206, 304) étant incidente sur l'élément optique et d'un angle de réfraction de la lumière après avoir été redirigée par le miroir donné en direction d'un œil donné de l'au moins un utilisateur.

18. Procédé selon la revendication 16 ou 17, comprenant en outre la commande de l'élément optique (110, 208, 408) par :
la commande d'une première partie de l'élément optique sur laquelle de la première lumière émanant d'une première cellule photo-émettrice (P1) de la seconde région d'affichage (108, 206, 304) est incidente, pour rediriger la première lumière en direction du premier œil (114a, 210a, 422a) de l'au moins un utilisateur, en fonction de la localisation relative du premier œil par rapport à l'élément optique ;
la commande d'une seconde partie de l'élément optique sur laquelle de la deuxième lumière émanant d'une deuxième cellule photo-émettrice (P2) de la seconde région d'affichage est incidente, pour rediriger la deuxième lumière en direction du second œil (114b, 210b, 422b) de l'au moins un utilisateur, en fonction de la localisation relative du second œil par rapport à l'élément optique ; et
la commande de la première partie et de la seconde partie de l'élément optique pour permettre à de la troisième lumière émanant d'une troisième cellule photo-émettrice (P0) de la première région d'affichage (106, 204, 302) d'être dirigée en direction du premier œil et du second œil, respectivement, sans déviation.

19. Procédé selon la revendication 18, dans lequel un premier pixel, un deuxième pixel et un troisième pixel de l'au moins une image correspondent à la première cellule photo-émettrice (P1), à la deuxième cellule photo-émettrice (P2) et à la troisième cellule photo-émettrice (P0), dans lequel l'étape de génération de l'au moins une image comprend la génération d'une première valeur d'intensité, d'une deuxième valeur d'intensité et d'une troisième valeur d'intensité pour le premier pixel, le deuxième pixel et le troisième pixel de l'au moins une image, respectivement, en fonction d'une première valeur d'intensité de sortie et d'une seconde valeur d'intensité de sortie d'un point 3D donné dans la première image virtuelle et la seconde image virtuelle, respectivement.

20. Procédé selon la revendication 19, dans lequel un combinateur optique (410) est agencé sur le trajet optique de l'unité d'affichage (104, 202, 300, 406) et sur un trajet optique d'un champ lumineux de monde réel (416) d'un environnement de monde réel, dans lequel le combinateur optique est employé pour réfléchir la lumière (418) reçue de l'élément optique (110, 208, 408) en direction du premier œil (114a, 210a, 422a) et du second œil (114b, 210b, 422b) de l'au moins un utilisateur, tout en combinant optiquement ladite lumière avec le champ lumineux de monde réel,
dans lequel le procédé comprend en outre :
la détermination d'une intensité d'une partie du champ lumineux de monde réel passant à travers une partie du combinateur optique à partir duquel la première lumière émanant de la première cellule photo-émettrice (P1) et la troisième lumière émanant de la troisième cellule photo-émettrice (P0) passent en direction du premier œil ;
le fait de détecter lorsque l'intensité de la partie du champ lumineux de monde réel passant à travers la partie du combinateur optique est inférieure à la première valeur d'intensité de sortie du point 3D donné ; et
lorsqu'il est détecté que l'intensité de ladite partie du champ lumineux de monde réel est inférieure à la première valeur d'intensité de sortie du point 3D donné, l'ajustement de la première valeur d'intensité du premier pixel et de la troisième valeur d'intensité du troisième pixel, en fonction d'une différence entre la première valeur d'intensité de sortie du point 3D donné et l'intensité de ladite partie du champ lumineux de monde réel.
